(19) Europäisches Patentamt
European Patent Office
Office européen des brevets

(11) **EP 4 613 505 A1**

(12) **EUROPEAN PATENT APPLICATION**

(43) Date of publication:
**10.09.2025 Bulletin 2025/37**

(21) Application number: **25157753.2**

(22) Date of filing: **13.02.2025**

(51) International Patent Classification (IPC):
**B60C 1/00** *(2006.01)*  **B60C 11/03** *(2006.01)*
**B60C 11/12** *(2006.01)*  **B60C 11/13** *(2006.01)*

(52) Cooperative Patent Classification (CPC):
**B60C 1/0016; B60C 11/0306; B60C 11/0323;
B60C 11/1281; B60C 11/13; B60C 11/1369;**
B60C 2011/0348; B60C 2011/1213; B60C 2200/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.03.2024 JP 2024034600**

(71) Applicant: **Sumitomo Rubber Industries, Ltd.
Kobe-shi, Hyogo 651-0072 (JP)**

(72) Inventors:
• **OTAKI, Rie
  Kobe-shi 651-0072 (JP)**
• **IZUMO, Suguru
  Kobe-shi 651-0072 (JP)**
• **KAGIMOTO, Shuji
  Kobe-shi 651-0072 (JP)**

(74) Representative: **Manitz Finsterwald
Patent- und Rechtsanwaltspartnerschaft mbB
Martin-Greif-Straße 1
80336 München (DE)**

(54) **HEAVY DUTY TIRE**

(57)    A tire includes a tread formed from a rubber composition containing a rubber component including a styrene butadiene rubber and a filler including silica. The tread includes a circumferential narrow groove and a transverse sipe. An amount CSB of the styrene butadiene rubber, an amount BS of the silica, a groove depth DC (mm) of a sipe body of the transverse sipe, and a groove depth HH (mm) of a body portion of the circumferential narrow groove satisfy the following relational expression.

$$(CSB + BS)/|DC - HH| \geq 5$$

FIG. 1

EP 4 613 505 A1

## Description

[REFERENCE TO RELATED APPLICATION]

The present application claims priority based on Japanese Patent Application No. 2024-034600 filed in Japan on March 7, 2024, and entire contents of this Japanese Patent Application are incorporated herein by reference.

## TECHNICAL FIELD

The present invention relates to heavy duty tires.

## BACKGROUND ART

From the viewpoint of consideration for the environment and safety, reduction of rolling resistance and improvement of running performance on a wet road surface (hereinafter referred to as wet performance) are required.

For example, in PATENT LITERATURE 1, rolling resistance is reduced by providing projection portions projecting toward each other from land portions adjacent to each other with a circumferential groove therebetween, and wet performance is improved by providing an outside groove space on the radially outer side of the projection portions, providing an inside groove space on the radially inner side of the projection portions, and providing communication recesses that provide communication between both spaces.

## CITATION LIST

[PATENT LITERATURE]

PATENT LITERATURE 1: Japanese Laid-Open Patent Publication No. 2017-94891

## SUMMARY OF THE INVENTION

[TECHNICAL PROBLEM]

An object of the present invention is to provide a heavy duty tire that can suppress a decrease in wet performance due to wear while reducing rolling resistance.

[SOLUTION TO PROBLEM]

A heavy duty tire according to an aspect of the present invention includes a tread formed from a rubber composition containing a rubber component including a styrene butadiene rubber and a filler including silica. The tread has a tread surface configured to come into contact with a road surface. The tread includes a plurality of circumferential grooves continuously extending circumferentially. The plurality of circumferential grooves provides the tread with a plurality of land portions aligned axially. The plurality of land portions includes a plurality of main land portions positioned between the circumferential grooves adjacent to each other. Each of the main land portions includes a plurality of main lateral grooves connecting the circumferential grooves adjacent to each other. The plurality of main lateral grooves provides the main land portions with a plurality of main blocks aligned circumferentially. In at least one of the main land portions, each of the main blocks includes a transverse sipe traversing the main block. The transverse sipe includes a sipe body and a tubular portion positioned radially inside the sipe body. The tubular portion is larger in groove width than the sipe body. The circumferential groove positioned between the main land portions adjacent to each other is a circumferential narrow groove. In the plurality of main land portions, the main land portions positioned axially outermost are outer main land portions. The circumferential groove positioned axially outside each of the outer main land portions is a circumferential wide groove larger in groove width than the circumferential narrow groove. The circumferential narrow groove includes a body portion and an enlarged width portion positioned radially inside the body portion. The body portion includes a body portion main body provided continuously from the enlarged width portion. The tread is deformed to bring facing wall surfaces of the circumferential narrow groove into contact with each other at the body portion main body. The enlarged width portion is larger in groove width than the body portion main body. A groove depth HH of the body portion is smaller than a groove depth DC of the sipe body, or the groove depth DC of the sipe body is smaller than the groove depth HH of the body portion. An amount CSB of the styrene butadiene rubber in 100 parts by mass of the rubber component is not less than 10 parts by mass. An amount BS of the silica per 100 parts by mass of the rubber component is not less than 15 parts by mass. The amount CSB of the styrene butadiene rubber, the amount BS of the silica, the groove depth DC (mm) of the sipe body, and the groove depth HH (mm) of the body portion satisfy the following relational expression.

$$(CSB + BS)/|DC - HH| \geq 5$$

[ADVANTAGEOUS EFFECTS OF THE INVENTION]

The present invention can provide a heavy duty tire that can suppress a decrease in wet performance due to wear while reducing rolling resistance.

**BRIEF DESCRIPTION OF DRAWINGS**

FIG. 1 is a developed view showing a part of a tread of a heavy duty tire according to an embodiment of the present invention.

FIG. 2 is a developed view showing a part of FIG. 1.

FIG. 3 is a cross-sectional view taken along a line III-III in FIG. 1.

FIG. 4 is a cross-sectional view taken along a line IV-IV in FIG. 2.

FIG. 5 is a cross-sectional view taken along a line V-V in FIG. 2.

FIG. 6 is a cross-sectional view of a transverse sipe shown in FIG. 4 according to a variation.

FIG. 7 is a cross-sectional view taken along a line VII-VII in FIG. 2.

FIG. 8 is a developed view of main lateral grooves according to a variation.

**DETAILED DESCRIPTION**

A tire of the present invention is fitted on a rim. The inside of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a normal rim, the internal pressure of the tire is adjusted to a normal internal pressure, and no load is applied to the tire is referred to as a normal state.

In the present invention, unless otherwise specified, the dimensions and angles of each component of the tire are measured in the normal state.

The dimensions and angles of each component in a meridian cross-section of the tire, which cannot be measured in a state where the tire is fitted on the normal rim, are measured in a cut plane of the tire obtained by cutting the tire along a plane including a rotation axis. In this measurement, the tire is set such that the distance between right and left beads is equal to the distance between the beads in the tire that is fitted on the normal rim. The configuration of the tire that cannot be confirmed in a state where the tire is fitted on the normal rim is confirmed in the above-described cut plane.

The normal rim means a rim specified in a standard on which the tire is based. The "standard rim" in the JATMA standard, the "Design Rim" in the TRA standard, and the "Measuring Rim" in the ETRTO standard are normal rims.

The normal internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are normal internal pressures.

A normal load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are normal loads.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

A center portion of the tread portion is also referred to as crown portion. A portion of the tread portion at an end thereof is also referred to as shoulder portion.

[Findings Supporting the Present Disclosure]

A tire has rolling resistance reduced by revising blending of a rubber composition forming a tread so as to decrease tanδ at 70°C. In this case, tanδ at 0°C is also decreased. Higher tanδ at 0°C is more preferred for improvement of wet performance. Revising blending of the rubber composition is difficult to achieve both reduction in rolling resistance and improvement of wet performance.

A narrow groove having wall surfaces that can support each other due to deformation of a tread can effectively suppress deformation of the tread.

Carving a circumferentially extending narrow groove (hereinafter, circumferential narrow groove) in a tread in place of a conventional circumferential main groove may achieve reduction of rolling resistance without revising blending the rubber composition. In this case, the tread is higher in stiffness than a conventional tread and may thus be decreased in wet performance. Considered in order to suppress the decrease in wet performance is also providing a transverse sipe traversing a land portion.

A tread wears. This decreases capacity of a groove carved in the tread. The decrease in groove capacity leads to a decrease in drainability. In the case where a tread is provided with a circumferential narrow groove and a transverse sipe, a tire can be reduced in rolling resistance while suppressing a decrease in wet performance at an initial stage of wear. However, wet performance may be decreased at or after a middle stage of wear.

Assume that the circumferential narrow groove includes a radially inner portion provided with an enlarged width portion enlarged in groove width, the transverse sipe includes a radially inner portion provided with a tubular portion, and the enlarged width portion or the tubular portion is formed to be exposed at or after the middle stage of wear. In this case, the decrease in wet performance may be suppressed at or after the middle stage of wear.

A worn tread is decreased in volume. The tread is thus increased in apparent stiffness. The increase in stiffness advantageously affects rolling resistance but disadvantageously affects wet performance. Accordingly, in a case where one of the enlarged width portion and the tubular portion is exposed formerly and the other is exposed latterly, the tire may fail to suppress the decrease in wet performance with such only one exposed portion.

In view of this, in order to achieve both reduction in rolling resistance and improvement of wet performance, the present inventors provide the tread with the circumferential narrow groove including the enlarged width portion and the transverse sipe including the tubular portion and have focused on and considered amounts of a styrene butadiene rubber and silica contained in the rubber composition forming the tread (specifically a cap portion) and timing of exposing the enlarged width portion and the tubular portion, to complete the following invention.

[Details of Embodiment of the Present Disclosure]

Description is made in detail hereinafter to a preferred embodiment of the present invention with reference to the drawings as appropriate.

The present invention provides a heavy duty tire including a tread formed from a rubber composition containing a rubber component including a styrene butadiene rubber and a filler including silica, the tread having a tread surface configured to come into contact with a road surface, in which

the tread includes a plurality of circumferential grooves continuously extending circumferentially,
the plurality of circumferential grooves provides the tread with a plurality of land portions aligned axially,
the plurality of land portions includes a plurality of main land portions positioned between the circumferential grooves adjacent to each other,
each of the main land portions includes a plurality of main lateral grooves connecting the circumferential grooves adjacent to each other,
the plurality of main lateral grooves provides the main land portions with a plurality of main blocks aligned circumferentially,
in at least one of the main land portions, each of the main blocks includes a transverse sipe traversing the main block,
the transverse sipe includes a sipe body and a tubular portion positioned radially inside the sipe body,
the tubular portion is larger in groove width than the sipe body,
the circumferential groove positioned between the main land portions adjacent to each other is a circumferential narrow groove,
in the plurality of main land portions, the main land portions positioned axially outermost are outer main land portions,
the circumferential groove positioned axially outside each of the outer main land portions is a circumferential wide groove larger in groove width than the circumferential narrow groove,

the circumferential narrow groove includes a body portion and an enlarged width portion positioned radially inside the body portion,

the body portion includes a body portion main body provided continuously from the enlarged width portion,

the tread is deformed to bring facing wall surfaces of the circumferential narrow groove into contact with each other at the body portion main body,

the enlarged width portion is larger in groove width than the body portion main body,

a groove depth HH of the body portion is smaller than a groove depth DC of the sipe body, or the groove depth DC of the sipe body is smaller than the groove depth HH of the body portion,

an amount CSB of the styrene butadiene rubber in 100 parts by mass of the rubber component is not less than 10 parts by mass,

an amount BS of the silica per 100 parts by mass of the rubber component is not less than 15 parts by mass, and the amount CSB of the styrene butadiene rubber, the amount BS of the silica, the groove depth DC (mm) of the sipe body, and the groove depth HH (mm) of the body portion satisfy a relational expression: below,

$$(CSB + BS)/|DC - HH| \geq 5.$$

The tread of the tire wears in use. The tire according to the present invention can suppress a decrease in wet performance due to wear while reducing rolling resistance not only at the initial stage of wear but also at the middle stage of wear causing exposure of the enlarged width portion of the circumferential narrow groove or the tubular portion of the transverse sipe. A mechanism exhibiting such an effect is not clarified but is inferred as follows.

The tread is deformed when the tread surface comes into contact with a road surface. This deformation brings the wall surfaces of the circumferential narrow groove into contact with each other at the body portion main body. The main land portions positioned on both sides of the circumferential narrow groove support each other. This suppresses deformation of the tread. The body portion main body can contribute to reduction in rolling resistance. The tread is increased in apparent stiffness. This may cause a decrease in wet performance. However, the sipe body of the transverse sipe suppresses the decrease in wet performance. It is inferred that the tire can suppress a decrease in wet performance due to wear while reducing rolling resistance in this manner at the initial stage of wear.

As the tread gradually wears, the circumferential grooves and the like are decreased in groove capacity. This may cause a decrease in wet performance. However, the enlarged width portion larger in groove width than the body portion main body is positioned radially inside the body portion main body. The tubular portion larger in groove width than the sipe body is positioned radially inside the sipe body. The enlarged width portion is exposed after the body portion main body disappears. The tubular portion is exposed after the sipe body disappears. The enlarged width portion or the tubular portion can contribute to suppressing a decrease in wet performance. The groove depth HH of the body portion is smaller than the groove depth DC of the sipe body, or the groove depth DC of the sipe body is smaller than the groove depth HH of the body portion. This accordingly avoids simultaneous exposure of the enlarged width portion and the tubular portion. This suppresses an increase in rolling resistance due to a rapid change in stiffness.

Wear decreases volume of the tread. The tread is decreased in deformation allowance, so that apparent stiffness of the tread is increased in the case where the tubular portion is exposed after the enlarged width portion is exposed as well as in the case where the enlarged width portion is exposed after the tubular portion is exposed. The increase in stiffness can contribute to reduction in rolling resistance.

The increase in stiffness advantageously affects rolling resistance but disadvantageously affects wet performance. However, the rubber composition forming the tread of the tire contains a styrene butadiene rubber and silica. This increases a glass transition temperature (Tg) of the rubber component as well as improves a road surface following property in a micro-deformation region. The tread can contribute to improvement of wet performance regardless of the stage of wear. In particular, the amount CSB of the styrene butadiene rubber, the amount BS of the silica, and the groove depths of the body portion of the circumferential narrow groove and the sipe body of the transverse sipe are set to satisfy the above relational expression. Accordingly, the styrene butadiene rubber and the silica synergistically suppress a decrease in wet performance also at or after the middle stage of wear where the enlarged width portion or the tubular portion are exposed. The tire can suppress a decrease in wet performance while maintaining low rolling resistance from the start of use until the tire needs to be replaced.

The present invention provides the tire that can suppress a decrease in wet performance due to wear while reducing rolling resistance.

Preferably, the rubber component further includes a natural rubber and a butadiene rubber, and the amount CSB of the styrene butadiene rubber, an amount CN of the natural rubber, and an amount CB of the butadiene rubber in 100 parts by mass of the rubber component satisfy a relational expression: below,

$$CN \geq CSB + CB.$$

When the rubber component further includes the natural rubber (hereinafter, NR) and the butadiene rubber (hereinafter, BR) so as to satisfy the above relational expression, it is inferred that the silica is enhanced in dispersibility in the rubber composition while durability of the tread is maintained. In this case, it is inferred that the tire can suppress a decrease in wet performance due to wear while reducing rolling resistance.

Preferably, an amount CS of the silica in 100 parts by mass of the filler is not less than 40 parts by mass in 100 parts by mass. Accordingly, the tread can further improve the road surface following property in the micro-deformation region and the tire can improve wet performance regardless of the stage of wear.

Preferably, the silica includes silica made from a biomass material. This is because such silica can contribute to reduction in environmental load.

Preferably, the filler includes silica having an average primary particle diameter of not greater than 16 nm. This is because such silica can contribute to improvement of wear resistance and durability.

Preferably, the filler further includes carbon black, and the carbon black includes recycled carbon black. This is because the recycled carbon black may be able to contribute to reduction of environmental load as well as reduce friction between a surface thereof and a rubber molecular chain to suppress heat generation.

Preferably, the filler further includes carbon black, and the carbon black includes carbon black having an average primary particle diameter of not greater than 19 nm. This is because such carbon black can contribute to improvement of wear resistance and durability.

Preferably, the rubber composition further contains a resin component. This is because the resin component can contribute to improvement of wet performance.

Preferably, a land ratio defined below is not less than 75%, In this case, the land portions are likely to support each other to effectively increase stiffness of the tread. The tire can be effectively reduced in rolling resistance as well as can be improved in wear resistance.

land ratio: a ratio of a total area value of ground-contact surfaces of a plurality of land portions included in a ground-contact surface to an area value of an entirety of the ground-contact surface, the ground-contact surface being obtained by: applying a load, which is 100% of a normal load, to the tire, which is fitted on a normal rim and whose internal pressure is adjusted to a normal internal pressure, with a camber angle as 0 degrees; and bringing the tire into contact with a flat road surface.

Preferably, the sipe body extends in a zigzag manner in a longitudinal direction and a depth direction thereof. Accordingly, when the tread is deformed and the wall surfaces of the sipe body come into tight contact with each other, the wall surfaces restrain each other so as to effectively increase stiffness of the tread. While maintaining wet performance, the tire can be effectively reduced in rolling resistance as well as can be improved in wear resistance.

Preferably, the main lateral grooves each include a tie bar rising from a groove bottom and extending between the main blocks positioned on both sides. This suppresses an inclination of the main blocks. This suppresses a decrease in stiffness of the tread. The tread is effectively increased in stiffness, so that the tire can be effectively reduced in rolling resistance as well as can be improved in wear resistance.

Preferably, the circumferential narrow groove includes a first narrow groove close to a first end as one end of the tread surface, a second narrow groove close to a second end as another end of the tread surface, and a connection narrow groove connecting the first narrow groove and the second narrow groove, and the first narrow groove and the second narrow groove are alternately disposed circumferentially. As described above, when force is applied to deform the tread, the wall surfaces of the circumferential narrow groove come into contact with each other at the body portion. The circumferential narrow groove circumferentially extends while meandering, and the wall surfaces are thus effectively engaged with each other. The main land portions positioned on the both sides of the circumferential narrow groove restrain each other. The tread is increased in apparent stiffness. This effectively suppresses deformation of the tread. The tire can be effectively reduced in rolling resistance as well as can be improved in wear resistance.

Thus, the heavy duty tire of the present invention can suppress a decrease in wet performance due to wear while reducing rolling resistance.

[Rubber Composition]

The tread is formed from a rubber composition. The tread is a crosslinked product of the rubber composition. The following will describe the rubber composition for the tread.
The rubber composition contains a rubber component and a filler.

[Rubber Component]

The rubber component includes a styrene butadiene rubber (hereinafter referred to as SBR). The rubber component includes an SBR, and may further include a rubber component other than the SBR, or may be composed of only the SBR.

[SBR]

The SBR is not particularly limited, and examples of the SBR include solution-polymerized SBRs (S-SBRs), emulsion-polymerized SBRs (E-SBRs), and modified SBRs thereof (modified S-SBRs and modified E-SBRs). Examples of modified SBRs include modified SBRs in which the terminals and/or the main chain thereof is modified, and modified SBRs coupled by using tin, a silicon compound, or the like (a condensate, one having a branch structure, etc.). Among them, S-SBRs and modified SBRs are preferable as SBRs included in the rubber component. Furthermore, hydrogenated products of these SBRs (hydrogenated SBRs), etc., can also be used as SBRs in this rubber composition. One of these SBRs may be selected and used alone, or two or more of these SBRs may be selected and used in combination.

The SBR has excellent viscoelastic properties in a region highly correlated with wet performance (specifically, grip performance on a wet road surface), and has excellent compatibility and reactivity with silica described later. The SBR is considered to be able to contribute to improvement of wet performance and wear resistance.

From the viewpoint of being able to contribute to improvement of wet performance and wear resistance, the styrene content of the SBR is preferably not less than 5% by mass, more preferably not less than 7% by mass, and further preferably not less than 9% by mass. The styrene content of the SBR is preferably not greater than 24% by mass, more preferably not greater than 18% by mass, and further preferably not greater than 16% by mass. The styrene content of the SBR is calculated by $^1$H-NMR measurement.

The vinyl content of the SBR is not less than 26% by mole. This is because, if the vinyl content is less than 26% by mole, it is difficult to improve wet performance and wear resistance to the degree required for tire performance. The vinyl content is preferably not less than 27% by mole, more preferably not less than 28% by mole, further preferably not less than 29% by mole, and particularly preferably not less than 30% by mole. The vinyl content of the SBR is preferably not greater than 45% by mole, more preferably not greater than 44% by mole, further preferably not greater than 43% by mole, and particularly preferably not greater than 42% by mole. The vinyl content (1,2-bond butadiene unit content) of the SBR is measured by infrared absorption spectrometry.

From the viewpoint of improving wet performance, the glass transition temperature (Tg) of the SBR is preferably not lower than -80°C, more preferably not lower than -70°C, and further preferably not lower than -65°C. From the viewpoint of reducing rolling resistance, the Tg of the SBR is preferably not higher than -40°C, more preferably not higher than -45°C, further preferably not higher than -50°C, and particularly preferably not higher than -55°C. The Tg of the SBR is obtained by performing differential scanning calorimetry (DSC) in accordance with JIS K7121 for "pure SBR content" obtained by removing elongation oil using acetone in accordance with JIS K6229.

From the viewpoint of improving wear resistance, the weight-average molecular weight (Mw) of the SBR is preferably not less than 100 thousand, more preferably not less than 150 thousand, and further preferably not less than 190 thousand. From the viewpoint of crosslinking uniformity, etc., the Mw of the SBR is preferably not greater than 2.5 million, more preferably not greater than 2 million, and further preferably not greater than 1 million. The Mw of the SBR can be obtained by conversion, based on a polystyrene standard, of a value measured by gel permeation chromatography (GPC) (e.g., GPC-8000 series manufactured by Tosoh Corporation, detector: differential refractometer, column: TSKGEL SUPERMULTIPORE HZ-M manufactured by Tosoh Corporation).

As described above, the amount CSB of the SBR in 100 parts by mass of the rubber component is not less than 10 parts by mass. The SBR can effectively contribute to improvement of wear resistance and wet performance. From this viewpoint, the amount CSB is preferably not less than 15 parts by mass, more preferably not less than 17 parts by mass, and further preferably not less than 19 parts by mass. From the viewpoint of maintaining good wear resistance, the amount CSB is preferably not greater than 60 parts by mass, more preferably not greater than 40 parts by mass, and further preferably not greater than 25 parts by mass.

As described above, the rubber component can include another rubber component other than the SBR. As the other rubber component other than the SBR, a crosslinkable rubber component that is generally used in the tire industry can be used. Examples of such a rubber component include isoprene-based rubber, butadiene rubber (BR), styrene-isoprene-butadiene copolymer rubber (SIBR), styrene-isobutylene-styrene block copolymer (SIBS), chloroprene rubber (CR), acrylonitrile-butadiene rubber (NBR), hydrogenated nitrile rubber (HNBR), butyl rubber (IIR), ethylene-propylene rubber, polynorbornene rubber, silicone rubber, polyethylene chloride rubber, fluororubber (FKM), acrylic rubber (ACM), and hydrin rubber. One of these other rubber components may be selected and used alone, or two or more of these other rubber components may be selected and used in combination.

The rubber component of the rubber composition for the tread preferably includes an isoprene-based rubber and a BR as rubber components other than the SBR.

[Isoprene-Based Rubber]

Examples of the isoprene-based rubber include natural rubber (NR), polyisoprene rubber (IR), reformed NR, modified NR, and modified IR. As the NR, for example, NRs that are generally used in the tire industry, such as SIR20, RSS#3, and TSR20, can be used. The IR is not particularly limited, and, as the IR, for example, IRs that are generally used in the tire industry, such as IR2200, can be used. Examples of the reformed NR include deproteinized natural rubber (DPNR) and ultra-pure natural rubber (UPNR), examples of the modified NR include epoxidized natural rubber (ENR), hydrogenated natural rubber (HNR), and grafted natural rubber, and examples of the modified IR include epoxidized isoprene rubber, hydrogenated isoprene rubber, and grafted isoprene rubber. These rubbers may be used individually, or two or more of these rubbers may be used in combination. Among them, NR is preferable. The rubber component of the rubber composition for the tread preferably includes an NR and a BR as rubber components other than the SBR.

In the case where the rubber component includes an NR, from the viewpoint of increasing the strength of the tread and improving wear resistance, the amount CN of the NR in 100 parts by mass of the rubber component is preferably not less than 30 parts by mass, more preferably not less than 45 parts by mass, and further preferably not less than 55 parts by mass. The amount CN is preferably not greater than 80 parts by mass, more preferably not greater than 70 parts by mass, and further preferably not greater than 65 parts by mass.

[Butadiene Rubber]

The butadiene rubber (BR) is not particularly limited, and, for example, BRs that are generally used in the tire industry, such as a BR having a cis content of less than 50% by mass (low-cis BR), a BR having a cis content of not less than 90% by mass (high-cis BR), a rare-earth element-based butadiene rubber synthesized using a rare-earth element-based catalyst (rare-earth element-based BR), a BR containing syndiotactic polybutadiene crystals (SPB-containing BR), and modified BRs (high-cis modified BR, low-cis modified BR), can be used. These BRs may be used individually, or two or more of these BRs may be used in combination. The cis content of the BR is a value calculated by infrared absorption spectrometry.

In the case where the rubber component includes a BR, from the viewpoint of improving wear resistance, the amount CB of the BR in 100 parts by mass of the rubber component is preferably not less than 5 parts by mass and more preferably not less than 15 parts by mass. The amount CB of the BR is preferably not greater than 40 parts by mass and more preferably not greater than 25 parts by mass.

In the case where the rubber component further includes an NR and a BR in addition to the SBR, as described above, the amount CN of the NR is preferably equal to the sum of the amount CSB of the SBR and the amount CB of the BR or larger than the sum of the amount CSB of the SBR and the amount CB of the BR. This is because the dispersibility of silica in the rubber composition is enhanced while the durability of the tread is maintained. In this case, it is inferred that the tire can suppress a decrease in wet performance due to wear while reducing rolling resistance. From this viewpoint, the amount CN of the NR is more preferably larger than the sum of the amount CSB of the SBR and the amount CB of the BR. In other words, the amount CN of the NR, the amount CSB of the SBR, and the amount CB of the BR more preferably satisfy the following relational expression.

$$CN > CSB + CB$$

[Filler]

As described above, the rubber composition for the tread contains a filler, and the filler includes silica. In other words, the rubber composition contains silica as a filler.

The filler more preferably includes carbon black and silica, and may include only carbon black and silica. In other words, the rubber composition more preferably contains carbon black and silica as a filler, and the filler may be composed of only carbon black and silica.

[Silica]

The silica is not particularly limited, and silicas that are generally used in the tire industry, such as silica prepared by a dry process (anhydrous silica) and silica prepared by a wet process (hydrous silica), can be used. From the viewpoint of environmental load, silica made from a biomass material (e.g., amorphous silica purified from rice husks) may also be used as described above. Among them, hydrous silica prepared by a wet process is preferable for the reason that it has a higher silanol group content. These silicas may be used individually, or two or more of these silicas may be used in combination.

Silica made from a biomass material can be obtained, for example, by: extracting silicate from rice husk ashes obtained by burning rice husks, with a sodium hydroxide solution; using the silicate to react with sulfuric acid in the same way as conventional wet silica; and then filtering, washing with water, drying, and pulverizing the precipitated silicon dioxide produced.

It should be noted that when silica crystallizes, the silica is insoluble in water, and silicic acid, which is a component of the silica, cannot be utilized. The crystallization of silica in the rice husk ash can be suppressed by controlling the combustion temperature and the combustion time (see Japanese Laid-Open Patent Publication No. 2009-2594, Akita Prefectural University Web Journal B/2019, vol. 6, p. 216-222, etc.).

The amorphous silica extracted from rice husks may be ones commercially available from Wilmar International Limited, etc.

From the viewpoint of improving wear resistance and durability, the average primary particle diameter of the silica is preferably not greater than 22 nm, more preferably not greater than 19 nm, and further preferably not greater than 16 nm. The average primary particle diameter is preferably not less than 6 nm, more preferably not less than 9 nm, and further preferably not less than 12 nm.

The average primary particle diameter of the silica can be obtained by observing the silica with a transmission or scanning electron microscope, measuring the outer diameters of 400 or more primary particles of the silica observed in the field of view, and averaging these outer diameters.

From the viewpoint of improving wear resistance and durability, the nitrogen adsorption specific surface area ($N_2SA$) of the silica is preferably not less than 100 $m^2/g$, more preferably not less than 110 $m^2/g$, and further preferably not less than 120 $m^2/g$. This nitrogen adsorption specific surface area is preferably not greater than 500 $m^2/g$, more preferably not greater than 350 $m^2/g$, and further preferably not greater than 250 $m^2/g$.

The nitrogen adsorption specific surface area ($N_2SA$) of the silica is measured by the BET method according to ASTM D3037-93.

The amount BS of the silica per 100 parts by mass of the rubber component is not less than 15 parts by mass. The silica can effectively reinforce the tread. Since the stiffness of the tread is increased, wear resistance and durability are improved. From this viewpoint, the amount BS of the silica is preferably not less than 17 parts by mass, more preferably not less than 19 parts by mass, and further preferably not less than 20 parts by mass. From the viewpoint of being able to obtain flexibility to alleviate stress, the amount BS of the silica is preferably not greater than 70 parts by mass, more preferably not greater than 50 parts by mass, and further preferably not greater than 35 parts by mass.

[Carbon Black]

The carbon black is not particularly limited, and, for example, carbon blacks that can be generally used in the tire industry, such as GPF, FEF, HAF, ISAF, and SAF, can be used. In addition, from the viewpoint of reducing environmental load and from the viewpoint of being able to reduce friction between the carbon black surface and a rubber molecular chain to suppress heat generation, recycled carbon black (rCB) obtained from the pyrolysis of used tires can also be used for the tire. These carbon blacks may be used individually, or two or more of these carbon blacks may be used in combination

In the present invention, to distinguish from recycled carbon black (rCB), the above-described carbon blacks that can be generally used in the tire industry, such as GPF, FEF, HAF, ISAF, and SAF, are also referred to as standard carbon black (sCB).

Recycled carbon black can be obtained from the pyrolysis process of used pneumatic tires, as described above. For example, European Patent Application Publication No. 3427975 refers to "Rubber Chemistry and Technology", Vol. 85, No. 3, pages 408-449 (2012), especially pages 438, 440, and 442, and states that recycled carbon black can be obtained by pyrolysis of organic materials at 550 to 800°C with exclusion of oxygen, or by vacuum pyrolysis at relatively low temperatures ([0027]). Carbon blacks obtained from such pyrolysis processes usually lack functional groups on the surfaces thereof, as mentioned in[0004] of Japanese Patent No. 6856781 (A Comparison of Surface Morphology And Chemistry of Pyrolytic Carbon Blacks with Commercial Carbon Blacks, Powder Technology 160 (2005) 190-193).

The recycled carbon black may lack functional groups on the surface thereof or may be treated so as to include functional groups on the surface thereof. The treatment to be performed so as to include functional groups on the surface of the recycled carbon black can be carried out by ordinary methods. For example, in European Patent Application Publication No. 3173251, carbon black obtained from a pyrolysis process is treated with potassium permanganate under acidic conditions to obtain carbon black containing hydroxyl and/or carboxyl groups on the surface thereof. Also, in Japanese Patent No. 6856781, carbon black obtained from a pyrolysis process is treated with an amino acid compound containing at least one thiol or disulfide group to obtain carbon black whose surface has been activated. The recycled carbon black according to the present embodiment also includes carbon black that has been treated so as to include functional groups on the surface thereof.

As the recycled carbon black, recycled carbon blacks commercially available from Strebl Green Carbon Pte Ltd, LDCarbon, etc., can be used.

From the viewpoint of improving wear resistance and durability, the average primary particle diameter of the carbon black is preferably not greater than 25 nm, more preferably not greater than 22 nm, and further preferably not greater than 19 nm. The average primary particle diameter is preferably not less than 6 nm, more preferably not less than 9 nm, and further preferably not less than 12 nm.

The average primary particle diameter of the carbon black can be obtained by observing the carbon black with a transmission or scanning electron microscope, measuring the outer diameters of 400 or more primary particles of the carbon black observed in the field of view, and averaging these outer diameters.

From the viewpoint of improving wear resistance and durability, the nitrogen adsorption specific surface area ($N_2SA$) of the carbon black is preferably not less than $10\,m^2/g$, more preferably not less than $20\,m^2/g$, and further preferably not less than $30\,m^2/g$. This nitrogen adsorption specific surface area ($N_2SA$) is preferably not greater than $250\,m^2/g$, more preferably not greater than $200\,m^2/g$, and further preferably not greater than $150\,m^2/g$. The nitrogen adsorption specific surface area ($N_2SA$) of the carbon black is measured according to JIS K6217-2: 2017.

In the case where the rubber composition contains carbon black, from the viewpoint of exhibiting reinforcing action and the viewpoint of preventing deterioration due to UV light, an amount BC of the carbon black per 100 parts by mass of the rubber component is preferably not less than 5 parts by mass, more preferably not less than 15 parts by mass, and further preferably not less than 25 parts by mass. From the viewpoint that the tread can obtain flexibility to alleviate stress, the amount BC is preferably not greater than 70 parts by mass, more preferably not greater than 60 parts by mass, and further preferably not greater than 50 parts by mass.

The amount of the recycled carbon black in 100 parts by mass of the carbon black is not particularly limited, and can be, for example, greater than 1 part by mass, greater than 5 parts by mass, greater than 10 parts by mass, greater than 20 parts by mass, greater than 25 parts by mass, or greater than 30 parts by mass. From the viewpoint of exhibiting the reinforcing action of the carbon black, the amount of the recycled carbon black is preferably less than 95 parts by mass, more preferably less than 90 parts by mass, and further preferably less than 85 parts by mass.

[Other Fillers]

As fillers other than the silica and the carbon black, fillers that are generally used in the tire industry, such as aluminum hydroxide, calcium carbonate, alumina, clay, and talc, can be blended.

From the viewpoint that the tread can further improve a road surface following property in a micro-deformation region and the tire can improve wet performance regardless of the stage of wear, the amount CS of the silica in 100 parts by mass of the filler is preferably not less than 20 parts by mass, more preferably not less than 30 parts by mass, and further preferably not less than 40 parts by mass. The amount CS is preferably not greater than 95 parts by mass, more preferably not greater than 80 parts by mass, and further preferably not greater than 65 parts by mass.

From the viewpoint of improving wear resistance and durability, the total amount of the fillers per 100 parts by mass of the rubber component is preferably not less than 45 parts by mass, more preferably not less than 50 parts by mass, and further preferably not less than 55 parts by mass. From the viewpoint that the tread can obtain flexibility to alleviate stress, the total amount of the fillers is preferably not greater than 80 parts by mass, more preferably not greater than 70 parts by mass, and further preferably not greater than 65 parts by mass.

[Silane Coupling Agent]

As described above, the rubber composition contains silica as a filler. The silica is preferably used in combination with a silane coupling agent. The silane coupling agent is not particularly limited, and any silane coupling agent that is conventionally used in combination with silica in the tire industry can be used. Examples of the silane coupling agent include: mercapto-based silane coupling agents such as 3-mercaptopropyltrimethoxysilane and NXT-Z100, NXT-Z45, and NXT manufactured by Momentive Performance Materials, Inc.; sulfide-based silane coupling agents such as bis(3-triethoxysilylpropyl)disulfide and bis(3-triethoxysilylpropyl)tetrasulfide; thioester-based coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycidoxy-based silane coupling agents such as γ-glycidoxypropyltriethoxysilane and γ-glycidoxypropyltrimethoxysilane; nitro-based silane coupling agents such as 3-nitropropyltrimethoxysilane and 3-nitropropyltriethoxysilane; and chloro-based silane coupling agents such as 3-chloropropyltrimethoxysilane and 3-chloropropyltriethoxysilane. Among them, sulfide-based silane coupling agents and/or mercapto-based silane coupling agents are preferable, and sulfide-based silane coupling agents are more preferable. One of these silane coupling agents may be used alone, or two or more of these silane coupling agents may be used in combination.

From the viewpoint of enhancing the dispersibility of the silica, the amount of the silane coupling agent per 100 parts by mass of the rubber component is preferably not less than 0.5 parts by mass, more preferably not less than 1.0 part by mass, further preferably not less than 2.0 parts by mass, and particularly preferably not less than 4.0 parts by mass. From the viewpoint of suppressing a decrease in wear resistance, the amount of the silane coupling agent is preferably not greater than 20 parts by mass, more preferably not greater than 15 parts by mass, and further preferably not greater than 10 parts by mass.

From the viewpoint of enhancing the dispersibility of the silica, the amount of the silane coupling agent per 100 parts by mass of the silica is preferably not less than 1 part by mass, more preferably not less than 3 parts by mass, further preferably not less than 5 parts by mass, and particularly preferably not less than 8 parts by mass. From the viewpoint of reduction of cost and improvement of processability, the amount of the silane coupling agent is preferably not greater than 20 parts by mass, more preferably not greater than 18 parts by mass, and further preferably not greater than 16 parts by mass.

[Other Ingredients]

In addition to the above components, the rubber composition according to the present embodiment can contain ingredients that are conventionally and generally used in the tire industry, such as a softener, wax, stearic acid, zinc oxide, an antioxidant, a vulcanizing agent, and a vulcanization accelerator, as appropriate.

Examples of the softener include a resin component, an oil, and a liquid rubber.

The resin component that can be used in the present embodiment is not particularly limited, resins that are commonly used in the tire industry can be used, and examples of such resins include adhesive resins such as C9-based resins, C5-based resins, C5C9-based resins, dicyclopentadiene-based resins, aromatic vinyl-based resins, coumarone-based resins, indene-based resins, terpene-based resins, rosin-based resins, and phenol-based resins. One of these resin components may be used alone, or two or more of these resin components may be used in combination.

C9-based resins refer to resins obtained by polymerizing C9 fractions, and may be resins obtained by polymerizing C9 fractions alone, or may be copolymers obtained by copolymerizing C9 fractions and other components. For example, a resin obtained by copolymerizing dicyclopentadiene (DCPD) and a C9 fraction is referred to as DCPD/C9 resin. These resins may also be hydrogenated or modified. Examples of C9 fractions include petroleum fractions having 8 to 10 carbon atoms such as vinyltoluene, alkylstyrene, coumarone, indene, methylindene, and dicyclopentadiene. One of these C9-based resins may be used alone, or two or more of these C9-based resins may be used in combination.

C5-based resins refer to resins obtained by polymerizing C5 fractions, and these resins may be hydrogenated or modified. Examples of C5 fractions other than dicyclopentadiene include petroleum fractions having 4 to 5 carbon atoms such as cyclopentadiene, isoprene, pentane, isopentane, neopentane, pentene, and pentadiene. One of these C5-based resins may be used alone, or two or more of these C5-based resins may be used in combination.

C5C9-based resins refer to resins obtained by copolymerizing the C5 fractions and the C9 fractions, and these resins may be hydrogenated or modified. As C5C9-based petroleum resins, for example, products commercially available from Tosoh Corporation, Zibo Luhua Hongjin New Material Group Co., Ltd., etc., can be used. One of these C5C9-based resins may be used alone, or two or more of these C5C9-based resins may be used in combination.

Dicyclopentadiene-based resins refer to resins containing cyclopentadiene (CPD) or dicyclopentadiene (DCPD) as a monomer component, and these resins may be hydrogenated or modified. Examples of dicyclopentadiene-based resins include DCPD/C9 resins containing dicyclopentadiene and the C9 fractions as monomer components (the DCPD/C9 resins may be hydrogenated or modified). DCPD/C9 resins containing dicyclopentadiene and styrene as monomer components are preferable, and DCPD/C9 resins containing dicyclopentadiene, styrene, and indene as monomer components are particularly preferable. As dicyclopentadiene-based resins, for example, products commercially available from Exxon Mobil Corporation, ENEOS Corporation, Zeon Corporation, Maruzen Petrochemical Co., Ltd., etc., can be used. One of these dicyclopentadiene-based resins may be used alone, or two or more of these dicyclopentadiene-based resins may be used in combination.

Aromatic vinyl-based resins refer to resins each containing an aromatic vinyl compound such as styrene, α-methylstyrene, vinyltoluene, and p-chlorostyrene as a monomer component whose amount is the largest, and these resins may be hydrogenated or modified. As an aromatic vinyl-based resin, a homopolymer of α-methylstyrene or styrene or a copolymer of α-methylstyrene and styrene is preferable, and a copolymer of α-methylstyrene and styrene is more preferable, for the reasons that the polymer is economic, is easily processed, and has excellent heat generation properties. As aromatic vinyl-based resins, for example, products commercially available from Kraton Corporation, Eastman Chemical Company, Mitsui Chemicals, Inc., etc., can be used. One of these aromatic vinyl-based resins may be used alone, or two or more of these aromatic vinyl-based resins may be used in combination.

Coumarone-based resins refer to resins containing coumarone as a monomer component, and these resins may be hydrogenated or modified. Examples of coumarone-based resins include coumarone-indene resins containing coumarone and indene as monomer components, and coumarone-indene-styrene resins containing coumarone, indene, and styrene as monomer components. One of these coumarone-based resins may be used alone, or two or more of these coumarone-based resins may be used in combination.

Indene-based resins refer to resins containing indene as a monomer component, and these resins may be hydrogenated or modified. Examples of indene-based resins include coumarone-indene resins containing coumarone and indene as monomer components, and coumarone-indene-styrene resins containing coumarone, indene, and styrene as monomer components. One of these indene-based resins may be used alone, or two or more of these indene-based resins may be used in combination.

Terpene-based resins refer to resins each containing a terpene compound such as α-pinene, β-pinene, limonene, and dipentene as a monomer component whose amount is the largest, and these resins may be hydrogenated or modified. Specific examples of terpene-based resins include: polyterpene resins each containing one or more of the terpene compounds alone as a monomer component; aromatic modified terpene resins each containing the terpene compound and an aromatic compound as monomer components; and terpene-phenol resins each containing the terpene compound and a phenol-based compound as monomer components. Examples of aromatic compounds as monomer components of aromatic modified terpene resins include styrene, α-methylstyrene, vinyltoluene, and divinyltoluene. Examples of phenol-based compounds as monomer components of terpene-phenol resins include phenol, bisphenol A, cresol, and xylenol. One of these terpene-based resins may be used alone, or two or more of these terpene-based resins may be used in combination.

Rosin-based resins refer to resins containing rosin acid compounds such as abietic acid, neoabietic acid, palustric acid, and isopimaric acid, and these resins may be hydrogenated or modified. The rosin-based resins are not particularly limited, and examples of the rosin-based resins include natural rosin resins, and rosin-modified resin modified by hydrogenation, disproportionation, dimerization, esterification, etc. One of these rosin-based resins may be used alone, or two or more of these rosin-based resins may be used in combination.

Phenol-based resins refer to resins each containing a phenol compound such as phenol and cresol as a monomer component whose amount is the largest. The phenol-based resins are not particularly limited, and examples of the phenol-based resins include phenol formaldehyde resins, alkylphenol formaldehyde resins, alkylphenol acetylene resins, and oil-modified phenol formaldehyde resins. One of these phenol-based resins may be used alone, or two or more of these phenol-based resins may be used in combination.

From the viewpoint of wet performance, the softening point of the resin component is preferably not lower than 80°C, more preferably not lower than 90°C, and further preferably not lower than 100°C. From the viewpoint of processability and improvement of the dispersibility of the rubber component and the fillers, the softening point of the resin component is preferably not higher than 150°C, more preferably not higher than 140°C, and further preferably not higher than 130°C. The softening point of the resin is a temperature that is measured with a ring and ball softening point measuring device according to 7.7 in JIS K 6220-1: 2015 and at which a ball has descended.

In the case where the rubber composition contains a resin component, from the viewpoint of wet performance, the amount of the resin component per 100 parts by mass of the rubber component is preferably not less than 1 part by mass, more preferably not less than 3 parts by mass, and further preferably not less than 5 parts by mass. From the viewpoint of suppression of heat generation, the amount of the resin component is preferably not greater than 60 parts by mass, more preferably not greater than 50 parts by mass, further preferably not greater than 40 parts by mass, and particularly preferably not greater than 30 parts by mass.

Examples of the oil include process oils, vegetable fats and oils, and animal fats and oils. Examples of the process oils include paraffin-based process oils, naphthene-based process oils, and aroma-based process oils. In addition, a process oil that has a low content of a polycyclic aromatic (PCA) compound and for which environmental impact is taken into consideration can also be used. Examples of the low PCA content process oil include a mild extraction solvate (MES), a treated distillate aromatic extract (TDAE), and a heavy naphthenic oil.

In the case where the rubber composition contains an oil, from the viewpoint of improving processability, the amount of the oil per 100 parts by mass of the rubber component is preferably not less than 1 part by mass, more preferably not less than 3 parts by mass, and further preferably not less than 5 parts by mass. From the viewpoint of improving wear resistance, the amount of the oil is preferably not greater than 90 parts by mass, more preferably not greater than 70 parts by mass, further preferably not greater than 50 parts by mass, and particularly preferably not greater than 30 parts by mass.

The liquid rubber is not particularly limited as long as it is a polymer in a liquid state at room temperature (25°C), and examples of the liquid rubber include liquid butadiene rubber (liquid BR), liquid styrene-butadiene rubber (liquid SBR), liquid isoprene rubber (liquid IR), liquid styrene-isoprene rubber (liquid SIR), and liquid farnesene rubber. These liquid rubbers may be used individually, or two or more of these liquid rubbers may be used in combination.

In the case where the rubber composition contains a liquid rubber, the amount of the liquid rubber per 100 parts by mass of the rubber component is preferably not less than 1 part by mass, more preferably not less than 3 parts by mass, and further preferably not less than 5 parts by mass. The amount of the liquid rubber is preferably not greater than 50 parts by mass, more preferably not greater than 40 parts by mass, and further preferably not greater than 20 parts by mass.

The wax is not particularly limited, and examples of the wax include: petroleum waxes such as paraffin wax and microcrystalline wax; and synthesized waxes such as polymers of ethylene, propylene, and the like. As commercially available products, products of OUCHI SHINKO CHEMICAL INDUSTRIAL CO., LTD., NIPPON SEIRO CO., LTD., Seiko Chemical Co., Ltd., etc., can be used. These waxes may be used individually, or two or more of these waxes may be used in combination.

In the case where the rubber composition contains a wax, from the viewpoint of the weather resistance of the rubber, the amount of the wax per 100 parts by mass of the rubber component is preferably not less than 0.5 parts by mass, more preferably not less than 1.0 part by mass, and further preferably not less than 1.5 parts by mass. From viewpoint of preventing whitening of the tire due to blooming, the amount of the wax is preferably not greater than 10 parts by mass and more preferably not greater than 5.0 parts by mass.

The antioxidant is not particularly limited, and examples of the antioxidant include antioxidants such as amine-based compounds, quinoline-based compounds, quinone-based compounds, phenol-based compounds, imidazole-based compounds, and carbamic acid metal salts. Phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, and N-cyclohexyl-N'-phenyl-p-phenylenediamine, and quinoline-based antioxidants such as a 2,2,4-trimethyl-1,2-dihydroquinoline polymer and 6-ethoxy-2,2,4-trimethyl-1,2-dihydroquinoline are preferable. These antioxidants may be used individually, or two or more of these antioxidants may be used in combination.

In the case where the rubber composition contains an antioxidant, from the viewpoint of the ozone crack resistance of the rubber, the amount of the antioxidant per 100 parts by mass of the rubber component is preferably not less than 0.5 parts by mass, more preferably not less than 1.0 part by mass, and further preferably not less than 1.5 parts by mass. From the viewpoint of wear resistance and wet grip performance, the amount of the antioxidant is preferably not greater than 10 parts by mass and more preferably not greater than 5.0 parts by mass.

As the stearic acid, a conventionally known one can be used, and, for example, products of NOF Corporation, Kao Corporation, FUJIFILM Wako Pure Chemical Corporation, Chiba Fatty Acid Co., Ltd., etc., can be used. These stearic acids may be used individually, or two or more of these stearic acids may be used in combination.

In the case where the rubber composition contains stearic acid, from the viewpoint of processability, the amount of the stearic acid per 100 parts by mass of the rubber component is preferably not less than 0.5 parts by mass, more preferably not less than 1.0 part by mass, and further preferably not less than 1.5 parts by mass. From the viewpoint of a vulcanization rate, the amount of the stearic acid is preferably not greater than 10 parts by mass and more preferably not greater than 5.0 parts by mass.

As the zinc oxide, a conventionally known one can be used, and, for example, products of Mitsui Mining & Smelting Co., Ltd., Toho Zinc Co., Ltd., HakusuiTech Co., Ltd., SEIDO CHEMICAL INDUSTRY CO., LTD., Sakai Chemical Industry Co., Ltd., etc., can be used. These zinc oxides may be used individually, or two or more of these zinc oxides may be used in combination.

In the case where the rubber composition contains zinc oxide, from the viewpoint of processability, the amount of the zinc oxide per 100 parts by mass of the rubber component is preferably not less than 0.5 parts by mass, more preferably not less than 1.0 part by mass, and further preferably not less than 1.5 parts by mass. From the viewpoint of wear resistance, the amount of the zinc oxide is preferably not greater than 10 parts by mass and more preferably not greater than 5.0 parts by mass.

As the vulcanizing agent, sulfur is suitably used. As the sulfur, powdery sulfur, oil-treated sulfur, precipitated sulfur, colloidal sulfur, insoluble sulfur, highly dispersible sulfur, etc., can be used.

In the case where the rubber composition contains sulfur as a vulcanizing agent, from the viewpoint of ensuring a sufficient vulcanization reaction, the amount of the sulfur per 100 parts by mass of the rubber component is preferably not less than 0.1 parts by mass, more preferably not less than 0.5 parts by mass, and further preferably not less than 1.0 part by mass. From the viewpoint of prevention of deterioration, the amount of the sulfur is preferably not greater than 5.0 parts by mass, more preferably not greater than 4.0 parts by mass, and further preferably not greater than 3.5 parts by mass. When oil-containing sulfur is used as a vulcanizing agent, the amount of the vulcanizing agent is represented as the amount of pure sulfur contained in the oil-containing sulfur.

Examples of vulcanizing agents other than sulfur include alkylphenol-sulfur chloride condensates, sodium 1,6-hexamethylene dithiosulfate dihydrate, and 1,6-bis(N,N'-dibenzylthiocarbamoyldithio)hexane. As these vulcanizing agents other than sulfur, products commercially available from Taoka Chemical Co., Ltd., LANXESS, Flexsys, etc., can be used.

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based vulcanization accelerators, aldehyde-ammonia-based vulcanization accelerators, imidazoline-based vulcanization accelerators, and xanthate-based vulcanization accelerators. These vulcanization accelerators may be used individually, or two or more of these vulcanization accelerators may be used in combination. Among them, from the viewpoint of more suitably obtaining the desired effect, one or more vulcanization accelerators selected from the group consisting of sulfenamide-based vulcanization accelerators, guanidine-based vulcanization accelerators, and thiazole-based vulcanization accelerators are preferable, and sulfenamide-based vulcanization accelerators are more preferable.

Examples of the sulfenamide-based vulcanization accelerators include N-tert-butyl-2-benzothiazolyl sulfenamide (TBBS), N-cyclohexyl-2-benzothiazolyl sulfenamide (CBS), and N,N-dicyclohexyl-2-benzothiazolyl sulfenamide (DCBS). Among them, N-tert-butyl-2-benzothiazolyl sulfenamide (TBBS) and N-cyclohexyl-2-benzothiazolyl sulfenamide (CBS) are preferable.

Examples of the guanidine-based vulcanization accelerators include 1,3-diphenylguanidine (DPG), 1,3-di-o-tolylguanidine, 1-o-tolylbiguanide, a di-o-tolylguanidine salt of dicatechol borate, 1,3-di-o-cumenylguanidine, 1,3-di-o-biphenylguanidine, and 1,3-di-o-cumenyl-2-propionylguanidine. Among them, 1,3-diphenylguanidine (DPG) is preferable.

Examples of the thiazole-based vulcanization accelerators include 2-mercaptobenzothiazole, a cyclohexylamine salt of 2-mercaptobenzothiazole, and di-2-benzothiazolyl disulfide. Among them, 2-mercaptobenzothiazole is preferable.

In the case where the rubber composition contains a vulcanization accelerator, the amount of the vulcanization accelerator per 100 parts by mass of the rubber component is preferably not less than 1.0 part by mass, more preferably not less than 1.5 parts by mass, and further preferably not less than 2.0 parts by mass. The amount of the vulcanization accelerator is preferably not greater than 8.0 parts by mass, more preferably not greater than 7.0 parts by mass, further preferably not greater than 6.0 parts by mass, and particularly preferably not greater than 5.0 parts by mass. When the amount of the vulcanization accelerator is set to be within such a range, it tends to be possible to ensure fracture strength and elongation.

The rubber composition is produced, for example, by kneading the respective components described above, using a rubber kneading device such as an open roll and a Banbury mixer.

As for the kneading conditions, in a base kneading step of kneading the additives other than the vulcanizing agent and the vulcanization accelerator, the kneading temperature is normally 100 to 180°C and preferably 120 to 170°C. In a finish kneading step of kneading the vulcanizing agent and the vulcanization accelerator, the kneading temperature is normally 120°C or lower and preferably 85 to 110°C.

The produced rubber composition is processed into a predetermined shape using an extruder or the like. In a forming machine, the processed rubber composition is combined with sidewalls, etc., to prepare a green tire (unvulcanized tire). The green tire is vulcanized in a mold incorporated in a vulcanizing machine, thereby obtaining a tire. The tire is a crosslinked product of the green tire. The vulcanization temperature is normally 140 to 190°C and preferably 150 to 185°C. The vulcanization time is normally 5 to 15 minutes.

The rubber composition described above is used for the tread of a tire (specifically, a cap portion which comes into contact with a road surface during running).

Next, a tire having a tread formed using this rubber composition will be described.

[Tire]

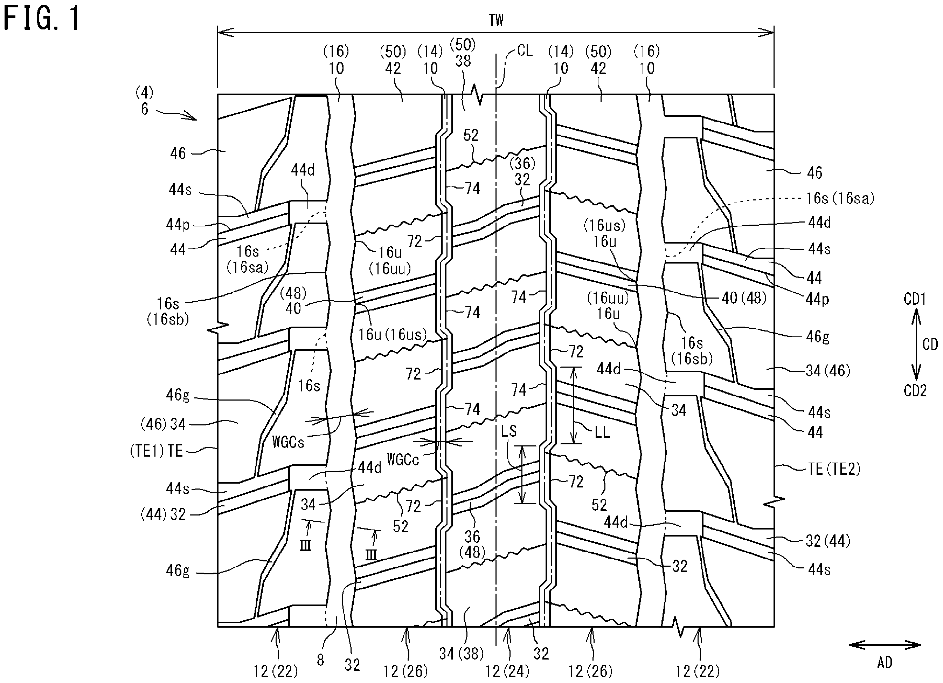

FIG. 1 is a developed plan view showing a part of a tread 4 of a tire 2 according to an embodiment of the present invention. The tire 2 is mounted to a vehicle such as a truck or a bus. The tire 2 is a heavy duty tire.

FIG. 1 includes a double-pointed arrow AD indicating an axial direction of the tire 2. The axial direction of the tire 2 means a direction parallel to a rotation axis of the tire 2. FIG. 1 also includes a double-pointed arrow CD indicating a circumferential direction of the tire 2. A direction perpendicular to a sheet of FIG. 1 is a radial direction of the tire 2.

FIG. 1 further includes a dashed line CL extending circumferentially and indicating an equator plane of the tire 2.

The tire 2 travelling on a road surface comes into contact with the road surface from a side indicated by an arrow CD1 toward a side indicated by an arrow CD2. The tire 2 includes a former contact portion indicated by the arrow CD1 and a latter contact portion indicated by the arrow CD2.

FIG. 1 shows an exemplary tread pattern formed on the tread 4. A tread pattern according to the present invention will be described hereinafter with reference to the exemplary tread pattern shown in FIG. 1. The present invention does not particularly limit an internal structure of the tire 2. Though not detailed, the tire 2 has a typical internal structure of a heavy duty tire.

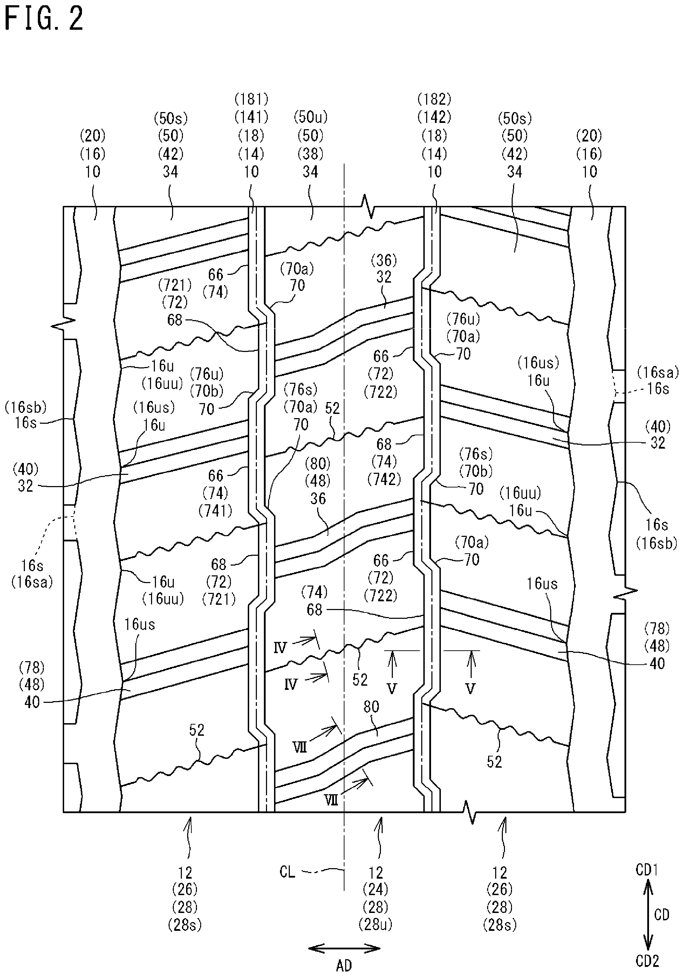

FIG. 2 shows part of the tread pattern in FIG. 1.

The tread 4 is positioned radially outside the tire 2 and extends circumferentially. The tread 4 has an outer circumferential surface serving as a tread surface 6. The tread surface 6 of the tire 2 comes into contact with a road surface. The tread 4 has the tread surface 6 to come into contact with a road surface.

The tread 4 is formed from a crosslinked rubber. The tread 4 is a crosslinked product of the above-described rubber composition.

The tread 4 includes a groove 8 carved therein. The groove 8 thus provided forms a tread pattern.

The tread surface 6 and the equator plane intersect each other at an equator. Though not shown, in a case where the groove 8 is positioned on the equator plane, the equator is specified based on a virtual outer surface obtained assuming that the groove 8 is not positioned on the equator plane.

The tread surface 6 has ends indicated as positions TE.

In a case where a tread surface of a tire has an apparently unidentifiable end, assumed as the end of the tread surface is a position on an outer surface of the tire corresponding to an axially outer end of a ground-contact surface obtained by applying a normal load to the tire in a normal state with a camber angle set to 0 degrees and bringing the tire into contact with a plane.

The tread surface 6 shown in FIG. 1 has one of the ends TE positioned on a left side of the equator plane, and the end TE is referred to as a first end TE1. The other end TE positioned on a right side of the equator plane is referred to as a second end TE2.

FIG. 1 indicates a length TW as a width of the tread surface 6. The width TW of the tread surface 6 is an axial distance from the first end TE1 to the second end TE2 of the tread surface 6. The width TW of the tread surface 6 is represented as a length measured along the tread surface 6.

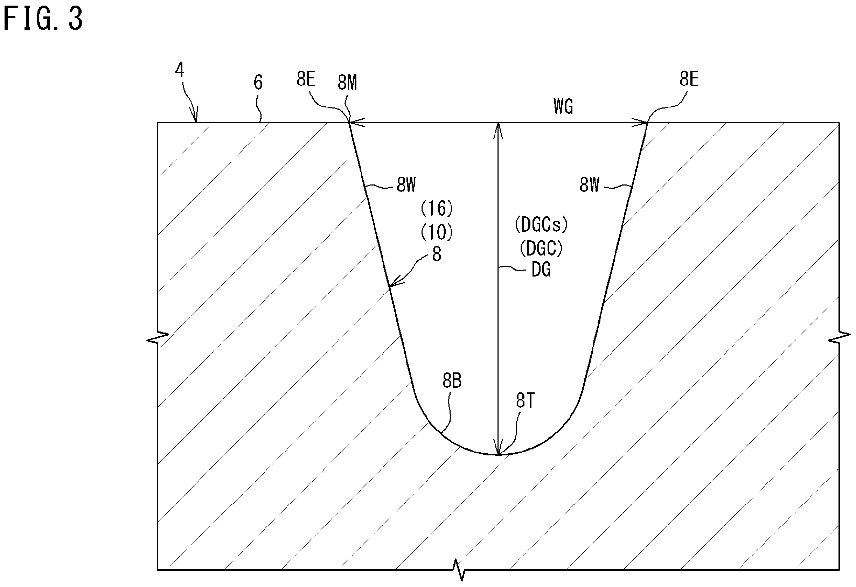

FIG. 3 is a sectional view taken along a line III-III in FIG. 1. FIG. 3 shows a section of the groove 8, specifically, a shoulder circumferential groove to be described later. The groove 8 will be described in terms of its principal configuration with reference to FIG. 3.

The groove 8 has a pair of wall surfaces 8W including a groove opening 8M, and a bottom surface 8B including a groove bottom 8T. The groove 8 has a groove width represented as a distance between a first wall surface 8W and a second wall surface 8W as the pair of wall surfaces 8W, that is, a distance between wall surfaces.

FIG. 3 includes a double-pointed arrow WG indicating a length as the groove width at the groove opening 8M of the groove 8. The groove width WG is represented as the minimum distance between a pair of edges 8E forming the groove opening 8M. In a case where a portion at the groove opening 8M of the groove 8 is processed to be tapered, the groove width at the groove opening 8M of the groove 8 is represented based on a virtual edge obtained assuming that the groove opening is not processed to be tapered.

FIG. 3 also includes a double-pointed arrow DG indicating a length as a groove depth of the groove 8. The groove depth DG of the groove 8 is represented as the minimum distance from a line segment connecting the left and right edges 8E to the groove bottom 8T of the groove 8.

The position of the groove 8, the groove width WG, and the groove depth DG are determined as appropriate in accordance with specifications of the tire 2.

The groove bottom 8T is located at a deepest position in the section of the groove 8. A distance from the line segment connecting the left and right edges 8E forming the groove opening 8M to the bottom surface 8B is measured along a normal line of the line segment. The groove bottom 8T is located at a position with the maximum distance from the line segment to the bottom surface 8B.

The bottom surface 8B shown in FIG. 3 is curved. The bottom surface 8B may include a plane that may include the groove bottom 8T. In this case, the groove bottom 8T is set as a width center of the plane.

The groove 8 having the groove width WG less than 1.0 mm at the groove opening 8M is also referred to as sipe. The groove 8 other than the sipe is also referred to as ordinary groove and has the groove width WG not less than 1.0 mm at the groove opening 8M.

The sipe may include a portion (hereinafter, ordinary groove corresponding portion) having a groove width not less than 1.0 mm between the groove opening 8M and the groove bottom 8T. In this case, the sipe is transformed into an ordinary groove when the tread 4 wears and the ordinary groove corresponding portion is exposed.

The ordinary groove may include a portion (a sipe corresponding portion) having a groove width less than 1.0 mm between the groove opening 8M and the groove bottom 8T. In this case, the ordinary groove is transformed into a sipe when the tread 4 wears and the sipe corresponding portion is exposed.

If an ordinary groove has a small groove width and has facing wall surfaces that can come into contact with each other when the tire comes into contact with a road surface, such an ordinary groove is also referred to as a narrow groove. If an ordinary groove has a large groove width and has facing wall surfaces that do not come into contact with each other even when the tire comes into contact with a road surface, such an ordinary groove is also referred to as a wide groove.

FIG. 3 includes a double-pointed arrow DGC indicating a length as a groove depth of a circumferential groove 10 to be described later. The groove depth DGC of the circumferential groove 10 is exemplarily not less than 10 mm and not greater than 21 mm. From the viewpoint that the tire 2 can exhibit excellent wet performance, the groove depth DGC is preferably not less than 13 mm and not greater than 18 mm.

the circumferential groove 10 continuously extending in a circumferential direction is carved in the tread 4 of the tire 2. A plurality of circumferential grooves 10 is carved in the tread 4 so as to form a plurality of land portions 12 aligned axially. In other words, the tread 4 includes the plurality of circumferential grooves 10. The plurality of circumferential grooves 10 provides the tread 4 with the plurality of land portions 12.

In the present invention, the plurality of circumferential grooves carved in the tread includes a circumferential groove that is positioned axially outermost and is also referred to as shoulder circumferential groove. The circumferential groove positioned on the equator plane is also referred to as center circumferential groove. In a case where no circumferential groove is provided on the equator plane, the circumferential groove closest to the equator plane is also referred to as center circumferential groove. In a case where the center circumferential groove and the shoulder circumferential groove interpose any circumferential groove, the circumferential groove is also referred to as middle circumferential groove.

The tread 4 shown in FIG. 1 includes four circumferential grooves 10 aligned axially. The four circumferential grooves 10 include the circumferential groove 10 that is positioned axially outermost and is a shoulder circumferential groove 16. The circumferential groove 10 close to the equator plane is a center circumferential groove 14.

FIG. 1 includes a double-pointed arrow WGCc indicating a length as a groove width at a groove opening of the center circumferential groove 14. FIG. 1 includes a double-pointed arrow WGCs indicating a length as a groove width at a groove opening of the shoulder circumferential groove 16.

A ratio (WGCc/TW) of the groove width WGCc of the center circumferential groove 14 to the width TW of the tread surface 6 is not greater than 2.0%.

As shown in FIG. 1, the groove width WGCs of the shoulder circumferential groove 16 is larger than the groove width WGCc of the center circumferential groove 14. A ratio (WGCs/TW) of the groove width WGCs of the shoulder circumferential groove 16 to the width TW of the tread surface 6 exceeds 2.0%. Specifically, the ratio (WGCs/TW) is preferably not less than 4.0% and not greater than 10%.

The shoulder circumferential groove 16 of the tire 2 includes outer peaks 16s close to the end TE of the tread surface 6 and inner peaks 16u close to the equator plane. The outer peaks 16s and the inner peaks 16u are alternately aligned circumferentially. The shoulder circumferential groove 16 extends circumferentially while alternately passing through the outer peaks 16s and the inner peaks 16u. The shoulder circumferential groove 16 extends zigzag in the circumferential direction. The shoulder circumferential groove 16 may alternatively extend straight in the circumferential direction.

As to be described later, the center circumferential groove 14 is a narrow groove having facing wall surfaces that can come into contact with each other when the tire 2 comes into contact with a road surface. The shoulder circumferential groove 16 is a wide groove having facing wall surfaces that do not come into contact with each other even when the tire 2 comes into contact with a road surface.

The tire 2 includes the center circumferential groove 14 as a circumferential narrow groove 18 and the shoulder circumferential groove 16 as a circumferential wide groove 20.

The four circumferential grooves 10 carved in the tread 4 of the tire 2 include a pair of circumferential narrow grooves 18 and a pair of circumferential wide grooves 20. The circumferential wide grooves 20 have the groove width WGCs larger than the groove width WGCc of the circumferential narrow grooves 18.

In the present invention, the plurality of land portions formed on the tread includes a land portion that is positioned axially outermost and is also referred to as shoulder land portion. The land portion positioned on the equator plane is also referred to as center land portion. In a case where no land portion is provided on the equator plane, the land portion closest to the equator plane is also referred to as center land portion. The center land portion and the shoulder land portion interpose a land portion also referred to as middle land portion.

The tread 4 includes five land portions 12 aligned axially. The five land portions 12 include the land portion 12 that is positioned axially outermost and is a shoulder land portion 22. The land portion 12 positioned on the equator plane is a center land portion 24. The center land portion 24 and the shoulder land portion 22 interpose the land portion 12 as a middle land portion 26.

Though not detailed, the land portions 12 have widths that are determined as appropriate in accordance with the specifications of the tire 2.

In the present invention, the plurality of land portions formed on the tread includes a land portion that is positioned between the circumferential grooves adjacent to each other and is also referred to as main land portion.

As shown in FIG. 2, the center land portion 24 of the tire 2 is positioned between two center circumferential grooves 14. The middle land portion 26 is positioned between the center circumferential groove 14 and the shoulder circumferential groove 16. Each of the center land portion 24 and the middle land portion 26 is the land portion 12 disposed between the circumferential grooves 10 adjacent to each other.

On the tread 4, the center land portion 24 and the middle land portion 26 are main land portions 28. The five land portions 12 formed on the tread 4 include three main land portions 28 each positioned between the circumferential grooves 10 adjacent to each other.

The tread 4 of the tire 2 is provided with the plurality of land portions 12 aligned axially, and the plurality of land portions 12 includes a plurality of main land portions 28 each positioned between the circumferential grooves 10 adjacent to each other.

In the present invention, the plurality of main land portions includes main land portions that are positioned axially outermost and are also referred to as outer main land portions.

In the tire 2, the center land portion 24 and a pair of middle land portions 26 as the main land portions 28 include the main land portions 28 that are positioned axially outermost and are the middle land portions 26. The middle land portions 26 are outer main land portions 28s.

Left and right outer main land portions 28s interpose the main land portion 28 also referred to as inner main land portion 28u. On the tire 2, the center land portion 24 is the inner main land portion 28u. The inner main land portion 28u is provided on both sides thereof with the circumferential narrow grooves 18. The circumferential narrow grooves 18 adjacent to each other interpose the main land portion 28 that is the inner main land portion 28u.

The shoulder circumferential groove 16 is positioned axially outside the middle land portion 26. As described above, the shoulder circumferential groove 16 is the circumferential wide groove 20. The circumferential grooves 10 positioned axially outside the outer main land portions 28s are the circumferential wide grooves 20 larger in groove width than the circumferential narrow groove 18.

The shoulder land portion 22 is positioned axially outside the shoulder circumferential groove 16 and includes the end TE of the tread surface 6. The shoulder land portion 22 is positioned further outside the shoulder circumferential groove 16 that is positioned axially outermost. The shoulder land portion 22 is not the main land portion 28.

The tire 2 may be further provided with the land portion 12 positioned between the shoulder land portion 22 and the middle land portion 26. In this case, the land portion 12 positioned between the shoulder land portion 22 and the middle land portion 26 is provided on both sides with the circumferential grooves 10, and is thus the main land portion 28. The shoulder land portion 22 and the middle land portion 26 may further interpose a plurality of land portions 12.

On this tire 2, a plurality of lateral grooves 32 traversing the land portions 12 is carved in all the land portions 12 formed on the tread 4. Each of the land portions 12 is thus provided with a plurality of blocks 34 aligned circumferentially. The tire 2 has the tread pattern as a block pattern.

The lateral groove 32 carved in the center land portion 24 is also referred to as center lateral groove 36. The center lateral groove 36 connects between the center circumferential groove 14 (hereinafter, a first center circumferential groove 141) adjacent to the first end TE1 of the tread surface 6 and the center circumferential groove 14 (hereinafter, a second center circumferential groove 142) adjacent to the second end TE2.

The block 34 formed in the center land portion 24 is also referred to as center block 38. A plurality of center lateral grooves 36 provides the center land portion 24 with a plurality of center blocks 38.

The lateral groove 32 carved in the middle land portion 26 is also referred to as middle lateral groove 40. The middle lateral groove 40 connects between the shoulder circumferential groove 16 and the center circumferential groove 14.

The block 34 formed in the middle land portion 26 is also referred to as middle block 42. A plurality of middle lateral grooves 40 provides the middle land portion 26 with a plurality of middle blocks 42.

The lateral groove 32 carved in the shoulder land portion 22 is also referred to as shoulder lateral groove 44. The shoulder lateral groove 44 connects between the end TE of the tread surface 6 and the outer peak 16s of the shoulder circumferential groove 16.

The block 34 formed in the shoulder land portion 22 is also referred to as shoulder block 46. A plurality of shoulder lateral grooves 44 provides the shoulder land portion 22 with a plurality of shoulder blocks 46.

The shoulder lateral groove 44 includes a deep bottom portion 44d adjacent to the shoulder circumferential groove 16 and a shallow bottom portion 44s adjacent to the end TE of the tread surface 6. The shallow bottom portion 44s includes a shoulder sipe 44p carved therein. The shoulder block 46 includes a shoulder narrow groove 46g carved therein to connect the deep bottom portion 44d as a former contact portion and the shallow bottom portion 44s as a latter contact portion.

In the present invention, the lateral groove 32 traversing the main land portion 28 is also referred to as main lateral groove 48.

As described above, the center land portion 24 and the middle land portion 26 are the main land portions 28. Accordingly, the center lateral grooves 36 carved in the center land portion 24 and the middle lateral grooves 40 carved in the middle land portion 26 are the main lateral grooves 48.

The tread 4 includes the plurality of main land portions 28 each of which includes the plurality of main lateral grooves 48 connecting the circumferential grooves 10 adjacent to each other.

The blocks 34 formed by carving the plurality of main lateral grooves 48 in the main land portion 28 are also referred to as main blocks 50.

The center blocks 38 formed by carving the center lateral grooves 36 in the center land portion 24 and the middle blocks 42 formed by carving the middle lateral grooves 40 in the middle land portions 26 are the main blocks 50.

The plurality of main lateral grooves 48 carved in the main land portion 28 provides the main land portion 28 with the plurality of main blocks 50 aligned circumferentially.

As described above, the plurality of main land portions 28 includes the outer main land portions 28s as the main land portions 28 positioned axially outermost and the inner main land portion 28u as the main land portion 28 positioned between the left and right outer main land portions 28s.

The main lateral grooves 48 carved in the outer main land portions 28s are also referred to as outer main lateral grooves 78, and the main blocks 50 formed in the outer main land portions 28s are also referred to as outer main blocks 50s.

The main lateral grooves 48 carved in the inner main land portion 28u are also referred to as inner main lateral grooves 80, and the main blocks 50 formed in the inner main land portion 28u are also referred to as inner main blocks 50u.

As described above, the shoulder land portion 22 is not the main land portion 28. The shoulder lateral grooves 44 carved in the shoulder land portion 22 are not the main lateral grooves 48. The shoulder blocks 46 formed by carving the shoulder lateral grooves 44 in the shoulder land portion 22 are not the main blocks 50.

The main blocks 50 of the tire 2 are each provided with a transverse sipe 52 traversing the main block 50.

The transverse sipes 52 of the tire 2 are provided in the center blocks 38 and the middle blocks 42 as the main blocks 50. The transverse sipes 52 may alternatively be provided only in the center blocks 38. The transverse sipes 52 may still alternatively be provided only in the middle blocks 42. That is, in at least one of the main land portions 28 of the tire 2, each of the main blocks 50 includes the transverse sipe 52 traversing the main block 50.

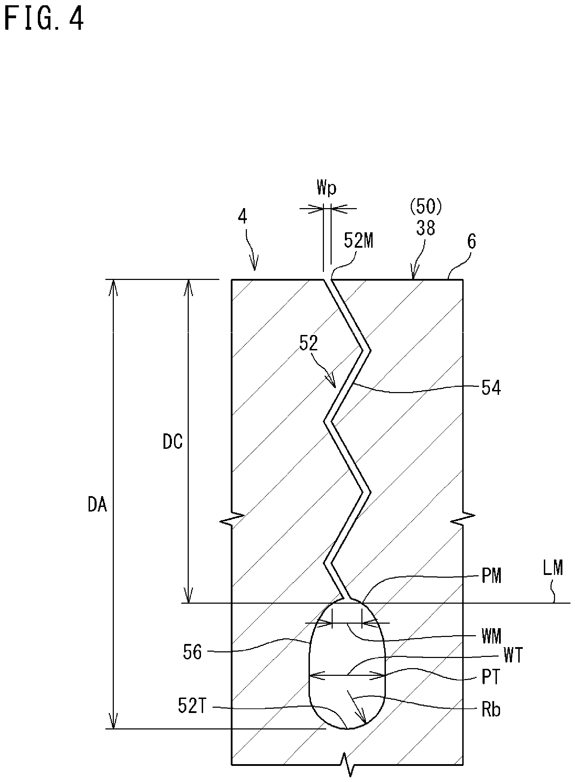

FIG. 4 is a sectional view taken along a line IV-IV in FIG. 2. FIG. 4 shows a section of the transverse sipe 52. FIG. 4 shows the section of the transverse sipe 52 along a plane perpendicular to a longitudinal direction of the transverse sipe 52.

FIG. 4 shows the section of the transverse sipe 52 provided in the center block 38. As described above, the transverse sipes 52 are provided also in the middle blocks 42. The transverse sipes 52 in the middle blocks 42 are equal in sectional shape to the transverse sipes 52 in the center blocks 38. Description is not made to the sectional shape of the transverse sipes 52 in the middle blocks 42.

The transverse sipe 52 includes a sipe body 54 and a tubular portion 56. The sipe body 54 includes a groove opening 52M of the transverse sipe 52. The tubular portion 56 includes a groove bottom 52T of the transverse sipe 52.

The tubular portion 56 is positioned radially inside the sipe body 54. The tubular portion 56 extends in the longitudinal direction of the transverse sipe 52.

FIG. 4 includes a solid line LM indicating a boundary between the sipe body 54 and the tubular portion 56. FIG. 4 also includes a double pointed arrow WM indicating a length as a groove width of the transverse sipe 52 measured along the boundary LM. The boundary LM is positioned such that the groove width WM is 1.0 mm.

The transverse sipe 52 includes the groove opening 52M having a groove width Wp less than 1.0 mm. A portion outside the boundary LM, that is, the sipe body 54 has a groove width less than 1.0 mm. The sipe body 54 is a sipe. A portion inside the boundary LM, that is, the tubular portion 56 has a groove width not less than 1.0 mm. The tubular portion 56 is wider in groove width than the sipe body 54.

The tubular portion 56 extends inward from a position on the boundary LM. FIG. 4 includes a double-pointed arrow WT indicating a length as the maximum groove width of the tubular portion 56. The tubular portion 56 has the maximum groove width WT at a position PT. The tubular portion 56 is tapered outward from a portion having the maximum groove width WT. The tubular portion 56 is tapered inward from the portion having the maximum groove width WT.

The tubular portion 56 has a sectional shape that may be circular or elliptical. The sectional shape may be a shape indicated by a straight line at the portion having the maximum groove width WT and arcs at a portion adjacent to the sipe body 54 and a portion adjacent to the groove bottom 52T, the portions interposing the portion indicated by the straight line (this shape is also referred to as track shape hereinafter).

FIG. 4 includes a double pointed arrow DA indicating a length as a groove depth of the transverse sipe 52. FIG. 4 also includes a double-pointed arrow DC indicating a length as a groove depth of the sipe body 54.

In the tire 2, the groove depth DA of the transverse sipe 52 is equal to the groove depth DGC of the circumferential groove 10, or the groove depth DA of the transverse sipe 52 is shallower than the groove depth DGC of the circumferential groove 10. Specifically, the groove depth DA of the transverse sipe 52 is not less than 0.80 times and not greater than 1.00 times a groove depth DGCs of the shoulder circumferential groove 16 as the circumferential wide groove 20.

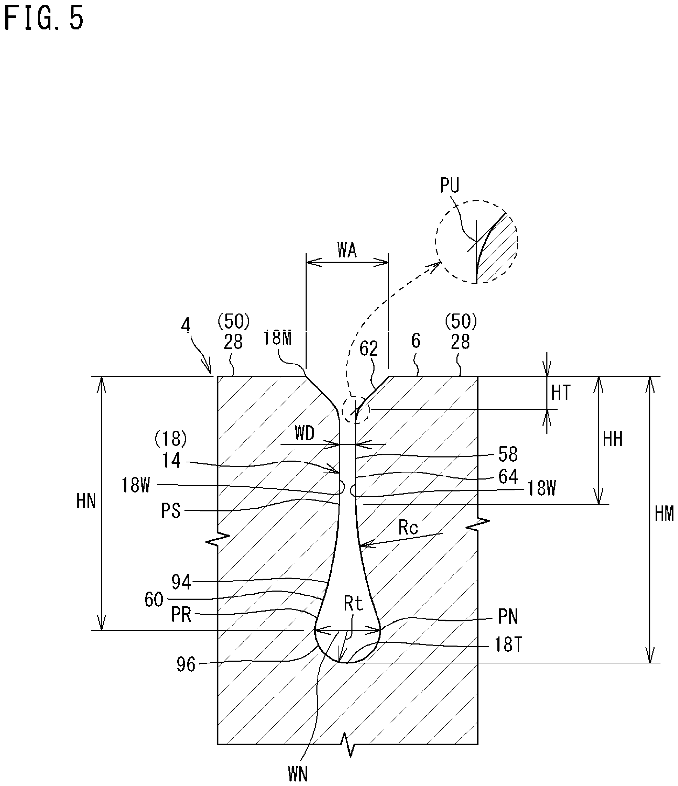

FIG. 5 is a sectional view taken along a line V-V in FIG. 2, showing the center circumferential groove 14. FIG. 5 shows a section of the center circumferential groove 14 along a plane perpendicular to a longitudinal direction of the center circumferential groove 14.

As described above, the center circumferential groove 14 is the circumferential narrow groove 18. FIG. 5 shows a section of the circumferential narrow groove 18.

The circumferential narrow groove 18 includes a body portion 58 and an enlarged width portion 60. The enlarged width portion 60 is positioned radially inside the body portion 58. The body portion 58 of the tire 2 includes a tapered portion 62 and a body portion main body 64. The circumferential narrow groove 18 includes a portion at a groove opening 18M processed to be tapered.

The tapered portion 62 includes the groove opening 18M of the circumferential narrow groove 18. The tapered portion 62 is tapered inward from the groove opening 18M. The tapered portion 62 shown in FIG. 5 has a wall surface having a contour indicated by a straight line. This contour may alternatively be indicated by a curved line.

FIG. 5 includes a double-pointed arrow WA indicating a length as a groove width at the groove opening 18M of the tapered portion 62. The groove width WA of the tapered portion 62 is preferably not less than 0.15 times and not greater than 0.45 times the groove width WGCs of the shoulder circumferential groove 16.

The body portion main body 64 is positioned radially inside the tapered portion 62. The body portion main body 64 is provided continuously to the tapered portion 62. The body portion main body 64 extends linearly in a depth direction of the circumferential narrow groove 18. In the section shown in FIG. 5, the body portion main body 64 has a wall surface having a contour indicated by a straight line. FIG. 5 includes a double-pointed arrow WD indicating a length as a groove width of the body portion main body 64. The body portion main body 64 has the groove width WD constant in the depth direction of the circumferential narrow groove 18.

As described above, in the case where the portion at the groove opening 8M of the groove 8 is processed to be tapered, the groove width at the groove opening 8M of the groove 8 is represented based on the virtual edge obtained assuming that the groove opening is not processed to be tapered. The groove width at the groove opening 18M of the circumferential narrow groove 18 is indicated by the groove width WD of the body portion main body 64.

The enlarged width portion 60 is positioned radially inside the body portion main body 64. The enlarged width portion 60 is provided continuously to the body portion main body 64. The enlarged width portion 60 has a groove width larger than the groove width WD of the body portion main body 64. The enlarged width portion 60 includes a groove bottom 18T of the circumferential narrow groove 18.

FIG. 5 includes a position PU indicating a boundary between the tapered portion 62 and the body portion main body 64. The boundary PU is indicated by an intersection point between a wall surface contour line of the tapered portion 62 and a wall surface contour line of the body portion main body 64. In a case where the boundary between the tapered portion 62 and the body portion main body 64 has a rounded portion as shown in FIG. 5, the boundary PU is indicated by an intersection point between an extension line of the wall surface contour line of the tapered portion 62 and an extension line of the wall surface contour line of the body portion main body 64.

FIG. 5 includes a position PS indicating a boundary between the body portion main body 64 and the enlarged width portion 60. As described above, in the section of the circumferential narrow groove 18, the wall surface contour line of the body portion main body 64 is straight. In the present invention, the enlarged width portion 60 has a wall surface contour line that converges on the wall surface contour line of the body portion main body 64 at the boundary PS between the body portion main body 64 and the enlarged width portion 60. Specifically, in the groove width from the body portion main body 64 to the enlarged width portion 60, a position at which the circumferential narrow groove 18 has a groove width equal to 1.1 times the groove width WD of the body portion main body 64 is indicated as the boundary PS between the body portion main body 64 and the enlarged width portion 60.

FIG. 5 includes a double-pointed arrow WN indicating a length as the maximum groove width of the enlarged width portion 60. The enlarged width portion 60 has the maximum groove width WN at a position PN (hereinafter, maximum groove width position PN). The enlarged width portion 60 is tapered outward from the maximum groove width position PN. The enlarged width portion 60 is curved to be depressed inward from outside thereof in a portion from the maximum groove width position PN to the boundary PS.

The enlarged width portion 60 is tapered inward from the maximum groove width position PN. The enlarged width portion 60 has a rounded contour in a portion from the maximum groove width position PN to the groove bottom 18T. Specifically, in the section shown in FIG. 5, the contour of the enlarged width portion 60 is indicated by an arc in the portion from the maximum groove width position PN to the groove bottom 18T. The arc has a center positioned on a line segment indicating the maximum groove width WN. FIG. 5 includes an arrow Rt indicating a radius of the arc. The radius Rt of the arc is exemplarily not less than 1.5 mm and not greater than 3.5 mm. The enlarged width portion 60 is curved to bulge outward from inside thereof in this portion.

In the enlarged width portion 60, a boundary between the portion curved to be depressed inward from outside thereof and the portion curved to bulge outward from inside thereof is positioned radially outside the maximum groove width position PN.

FIG. 5 includes a position PR as the boundary between the portion curved to be depressed inward and the portion curved to bulge outward. The portion curved to be depressed inward in the enlarged width portion 60 of the tire 2 is also referred to as inflection portion 94. The portion curved to bulge outward in the enlarged width portion 60 is also referred to as bottom portion 96. The enlarged width portion 60 includes the inflection portion 94 and the bottom portion 96.

The inflection portion 94 connects between the body portion main body 64 and the bottom portion 96. The inflection portion 94 has a groove width gradually increased from a side of the body portion main body 64 toward a side of the bottom portion 96. The inflection portion 94 is curved to be depressed inward from outside thereof. The inflection portion 94 of the tire 2 has a contour indicated by an arc. FIG. 5 includes an arrow Rc indicating a radius of the arc as the contour of the inflection portion 94.

The bottom portion 96 includes the groove bottom 18T. The bottom portion 96 has a rounded contour. The bottom portion 96 is curved to bulge outward. The bottom portion 96 is a portion having a contour indicated by the arc having the radius Rt in the enlarged width portion 60.

The boundary PR is a boundary between the inflection portion 94 and the bottom portion 96. The arc indicating the contour of the inflection portion 94 and the arc indicating the contour of the bottom portion 96 are in contact with each other on the boundary PR. The bottom portion 96 includes the maximum groove width position PN of the enlarged width portion 60. The maximum groove width position PN is positioned radially inside the boundary PR. The maximum groove width WN of the enlarged width portion 60 is equal to twice the radius Rt of the arc indicating the contour of the bottom portion 96.

In the tire 2, the radius Rc of the arc indicating the contour of the inflection portion 94 is larger than the radius Rt of the arc indicating the contour of the bottom portion 96. The circumferential narrow groove 18 can thus sufficiently exhibit its function. From this viewpoint, a ratio Rc/Rt of the radius Rc of the arc indicating the contour of the inflection portion 94 to the radius Rt of the arc indicating the contour of the bottom portion 96 is preferably not less than 1.5 and not greater than 20.

The ratio Rc/Rt set to be not less than 1.5 can suppress uneven wear due to a rapid change in the stiffness of the tire 2. The ratio Rc/Rt is more preferably not less than 2.0 from this viewpoint.

The ratio Rc/Rt set to be not greater than 20 can suppress a decrease in the wet performance of the tire 2. The ratio Rc/Rt is more preferably not greater than 15 from this viewpoint.

As described above, the groove width of the enlarged width portion 60 is larger than the groove width WD of the body portion main body 64. From the viewpoint of maintaining wet performance, the maximum groove width WN of the enlarged width portion 60 is preferably not less than twice the groove width WD of the body portion main body 64, and is more preferably not less than three times. From the viewpoint that an impact is suppressed on stiffness of the crown portion of the tread 4 and the tire 2 can maintain excellent uneven wear resistance, the maximum groove width WN of the enlarged width portion 60 is preferably not greater than eight times the groove width WD of the body portion main body 64, and is more preferably not greater than seven times.

The circumferential narrow groove 18 is not necessarily provided with the tapered portion 62. In other words, the body portion 58 may be formed only by the body portion main body 64. In this case, the section of the circumferential narrow groove 18 is shaped such that the wall surface of the body portion main body 64 shown in FIG. 5 is extended outward and an extension line of the wall surface and an extension line of the tread surface 6 intersect each other at a groove opening of the body portion main body 64, that is, the groove opening 18M of the circumferential narrow groove 18.

From the viewpoint that the tire 2 can effectively suppress a strain concentration to an edge of the main block 50 while ensuring groove capacity of the circumferential narrow groove 18, the circumferential narrow groove 18 is preferably provided with the tapered portion 62 as shown in FIG. 5.

FIG. 5 includes a double-pointed arrow HM indicating a length as a groove depth of the circumferential narrow groove 18. FIG. 5 includes a double-pointed arrow HH indicating a length as a groove depth of the body portion 58. FIG. 5 includes a double-pointed arrow HT indicating a length as a groove depth of the tapered portion 62.

The groove depth HM of the circumferential narrow groove 18 of the tire 2 is substantially equal to the groove depth DGC of the circumferential groove 10. Specifically, the groove depth HM of the circumferential narrow groove 18 is not less than 0.95 times and not greater than 1.05 times the groove depth DGCs of the shoulder circumferential groove 16.

From the viewpoint that the tire 2 can effectively suppress a strain concentration to the edge of the main block 50 while ensuring the groove capacity of the circumferential narrow groove 18, a ratio (HT/HM) of the groove depth HT of the tapered portion 62 to the groove depth HM of the circumferential narrow groove 18 is preferably not less than 0.12 and not greater than 0.14.

As described above, the circumferential narrow groove 18 of the tire 2 includes the body portion main body 64 having the narrow groove width WD. The tread 4 is deformed when the tread surface 6 comes into contact with a road surface. The groove width WD of the body portion main body 64 is adjusted such that facing wall surfaces 18W of the circumferential narrow groove 18 are brought into contact with each other at the body portion main body 64 by deformation of the tread 4. The tread 4 is deformed to bring facing wall surfaces 18W of the circumferential narrow groove 18 into contact with each other at the body portion main body 64.

The circumferential narrow groove 18 is formed between the center land portion 24 and the middle land portion 26. As described above, the circumferential narrow groove 18 is the circumferential groove 10, and the center land portion 24 and the middle land portion 26 are the main land portions 28. In the tire 2, the circumferential groove 10 positioned between the main land portions 28 adjacent to each other is the circumferential narrow groove 18.

When the tread surface 6 comes into contact with a road surface and the tread 4 is deformed, the facing wall surfaces 18W of the circumferential narrow groove 18 come into contact with each other at the body portion main body 64. The facing wall surfaces 18W of the circumferential narrow groove 18 are brought into contact with each other at the body portion main body 64 by deformation of the tread 4. The main land portions 28 (specifically main blocks 50) positioned on the both sides of the circumferential narrow groove 18 support each other. This suppresses deformation of the tread 4. The circumferential narrow groove 18 can contribute to reduction in rolling resistance. Meanwhile, the tread 4 is increased in apparent stiffness and may thus be decreased in wet performance. However, the sipe body 54 of the transverse sipe 52 suppresses the decrease in wet performance. At an initial stage of wear, it is inferred that the tire 2 can suppress a decrease in wet performance due to wear while reducing rolling resistance in this manner.

As the tread 4 gradually wears, the circumferential grooves 10 and the like are decreased in groove capacity. This may cause a decrease in wet performance. However, the enlarged width portion 60 larger in groove width than the body portion main body 64 is positioned radially inside the body portion 58 of the circumferential narrow groove 18. Furthermore, the tubular portion 56 larger in groove width than the sipe body 54 is positioned radially inside the sipe body 54 of the transverse sipe 52. In the circumferential narrow groove 18, the enlarged width portion 60 is exposed after the body portion main body 64 disappears. In the transverse sipe 52, the tubular portion 56 is exposed after the sipe body 54 disappears. The enlarged width portion 60 and the tubular portion 56 can contribute to suppressing a decrease in wet performance.

In the tire 2, the groove depth HH of the body portion 58 is smaller than the groove depth DC of the sipe body 54, or the groove depth DC of the sipe body 54 is smaller than the groove depth HH of the body portion 58. This avoids simultaneous exposure of the enlarged width portion 60 and the tubular portion 56. This accordingly suppresses an increase in rolling resistance due to a rapid change in stiffness.

Wear decreases volume of the tread 4. The tread 4 is decreased in deformation allowance, so that apparent stiffness of the tread 4 is increased in the case where the tubular portion 56 is exposed after the enlarged width portion 60 is exposed as well as in the case where the enlarged width portion 60 is exposed after the tubular portion 56 is exposed. The increase in stiffness can contribute to reduction in rolling resistance.

The increase in stiffness advantageously affects rolling resistance but disadvantageously affects wet performance. However, the rubber composition forming the tread 4 of the tire 2 contains a styrene butadiene rubber and silica. This increases a glass transition temperature (Tg) of the rubber component as well as improves a road surface following property in a micro-deformation region. The tread 4 of the tire 2 can contribute to improvement of wet performance regardless of the stage of wear. In particular, the amount CSB of the styrene butadiene rubber, the amount BS of the silica, the groove depth HH of the body portion 58 of the circumferential narrow groove 18, and the groove depth DC of the sipe body 54 of the transverse sipe 52 are set to satisfy the above relational expression. Accordingly, the styrene butadiene rubber and the silica synergistically suppress a decrease in wet performance also at or after a middle stage of wear where the enlarged width portion 60 or the tubular portion 56 are exposed.

The tire 2 can suppress a decrease in wet performance while maintaining low rolling resistance from the start of use until the tire needs to be replaced.

The tire 2 can suppress a decrease in wet performance due to wear while reducing rolling resistance.

The land ratio of the tire 2 is preferably not less than 75%. In this case, the land portions 12 are likely to support each other to effectively increase stiffness of the tread 4. The tire 2 can be effectively reduced in rolling resistance as well as can be improved in wear resistance. As described above, the rubber composition of the tread 4 contains silica as a filler. This may decrease stiffness of the tread 4 in comparison to a case where the filler contains only carbon black. However, when the land ratio is set to be not less than 75%, the tread 4 can maintain stiffness at the required degree. In the tire 2, the circumferential narrow groove 18 and the transverse sipe 52 can sufficiently exhibit functions thereof. The tire 2 can suppress a decrease in wet performance due to wear while reducing rolling resistance. The land ratio is more preferably not less than 78% from this viewpoint. The land ratio is preferably not greater than 90% from the viewpoint of maintaining excellent wet performance.

As described above, the groove depth HH of the body portion 58 is smaller than the groove depth DC of the sipe body 54, or the groove depth DC of the sipe body 54 is smaller than the groove depth HH of the body portion 58. Specifically, the groove depth HH (mm) of the body portion 58 and the groove depth DC (mm) of the sipe body 54 preferably satisfy the following relational expression.

$$0 < |DC - HH| \leq 5$$

From the viewpoint that the tubular portion 56 of the transverse sipe 52 can smoothly transition to the enlarged width portion 60 of the circumferential narrow groove 18 or the enlarged width portion 60 of the circumferential narrow groove 18 can smoothly transition to the tubular portion 56 of the transverse sipe 52, the groove depth HH (mm) of the body portion 58 and the groove depth DC (mm) of the sipe body 54 more preferably satisfy the following relational expression.

$$1 \leq |DC - HH| \leq 4$$

The circumferential narrow groove 18 is gradually increased in groove width from the body portion 58 to the maximum groove width position PN of the enlarged width portion 60. A change in stiffness of the case where an exposed portion of the circumferential narrow groove 18 changes from the body portion 58 to the enlarged width portion 60 is smaller than a change stiffness of the case where an exposed portion of the transverse sipe 52 changes from the sipe body 54 to the tubular portion 56. From the viewpoint that a rapid change in stiffness due to wear can be suppressed effectively, in the case where the groove depth DC of the sipe body 54 is larger than the groove depth HH of the body portion 58, that is, in the case where the groove depth HH of the body portion 58 is smaller than the groove depth DC of the sipe body 54, a ratio (HH/DC) of the groove depth HH of the body portion 58 to the groove depth DC of the sipe body 54 is preferably not less than 0.50 and not greater than 0.95, and is more preferably not less than 0.60 and not greater than 0.90. In the case where the groove depth DC of the sipe body 54 is smaller than the groove depth HH of the body portion 58, from a similar viewpoint, a ratio (DC/HH) of the groove depth DC of the sipe body 54 to the groove depth HH of the body portion 58 is preferably not less than 0.50 and not greater than 0.95, and is more preferably not less than 0.60 and not greater than 0.90.

A ratio (HH/HM) of the groove depth HH of the body portion 58 to the groove depth HM of the circumferential narrow groove 18 is preferably not less than 0.30 and not greater than 0.70.

When the ratio (HH/HM) is set to be not less than 0.30, the tire 2 can effectively suppress an impact of the enlarged width portion 60 on stiffness of the main block 50. The tire 2 can progress wear of the tread 4 while maintaining stiffness of the main block 50. The tire 2 can maintain excellent uneven wear resistance. The ratio (HH/HM) is more preferably not less than 0.35 from this viewpoint.

Particularly in the case where the groove depth HH of the body portion 58 is smaller than the groove depth DC of the sipe body 54, the ratio (HH/HM) set to be not greater than 0.70 effectively suppresses a rapid change in the stiffness of the main block 50 from exposure of the enlarged width portion 60 to exposure of the tubular portion 56 of the transverse sipe 52. Also in this case, the tire 2 can progress wear of the tread 4 while maintaining stiffness of the main block 50 so as to maintain excellent uneven wear resistance. The ratio (HH/HM) is more preferably not greater than 0.65 from this viewpoint.

The body portion main body 64 of the circumferential narrow groove 18 has the groove width WD smaller than the groove width WGCs at the groove opening of the shoulder circumferential groove 16. As described above, when the tire 2 comes into contact with a road surface, the pair of wall surfaces 18W of the circumferential narrow groove 18 come into contact with each other at the body portion main body 64. The main land portions 28 disposed adjacent to each other and interposing the circumferential narrow groove 18 support each other. The main land portions 28 are formed in the crown portion of the tread portion. The main land portions 28 disposed adjacent to each other and supporting each other increase apparent stiffness of the crown portion to suppress deformation of the crown portion. The tire 2 can effectively suppress wear at the crown portion. The tire 2 can be improved in uneven wear resistance.

From this viewpoint, a ratio (WD/WGCs) of the groove width WD of the body portion main body 64 of the circumferential narrow groove 18 to the groove width WGCs of the shoulder circumferential groove 16 is preferably not greater than 0.35 and is more preferably not greater than 0.20.

From the viewpoint that the circumferential narrow groove 18 can contribute to drainability and the tire 2 can maintain excellent wet performance, the ratio (WD/WGCs) is preferably not less than 0.01 and is more preferably not less than 0.05.

FIG. 5 includes a double-pointed arrow HN indicating a length as a groove depth from the groove opening 18M of the circumferential narrow groove 18 to the maximum groove width position PN.

From the viewpoint that the enlarged width portion 60 can effectively contribute to suppression of a decrease in wet performance, a ratio (HN/HM) of the groove depth HN from the groove opening 18M of the circumferential narrow groove 18 to the maximum groove width position PN to the groove depth HM of the circumferential narrow groove 18 is preferably not less than 0.75 and not greater than 0.95.

A ratio (DC/DA) of the groove depth DC of the sipe body 54 of the transverse sipe 52 to the groove depth DA of the transverse sipe 52 is preferably not less than 0.35 and not greater than 0.80.

When the ratio (DC/DA) is set to be not less than 0.35, the tire 2 can achieve exposure of the tubular portion 56 at appropriate timing. The tire 2 can progress wear of the tread 4 while maintaining stiffness of the main block 50. The tire 2 can maintain excellent uneven wear resistance. The ratio (DC/DA) is more preferably not less than 0.40 from this viewpoint.

When the ratio (DC/DA) is set to be not greater than 0.80, the tubular portion 56 can effectively contribute to improvement in outer appearance quality and exhibition of traction performance. The ratio (DC/DA) is more preferably not greater than 0.75 from this viewpoint.

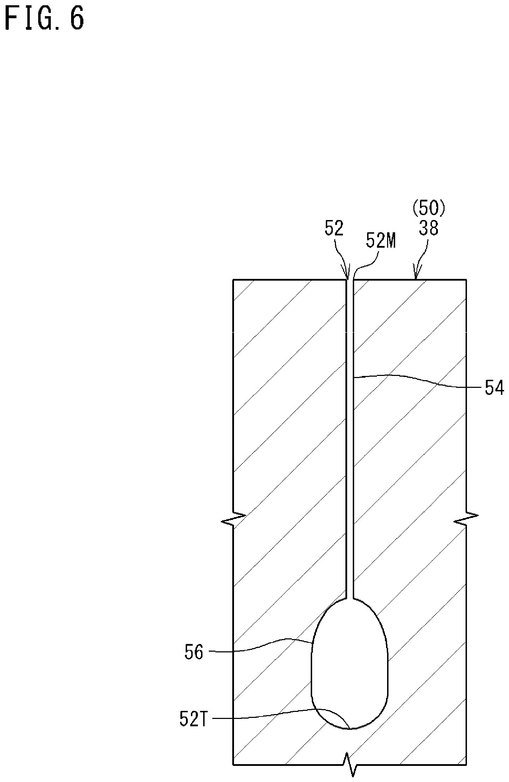

The sipe body 54 extends in a zigzag manner in the longitudinal direction of the transverse sipe 52 as shown in FIG. 2, and extends in a zigzag manner in a depth direction of the transverse sipe 52 as shown in FIG. 4. The sipe body 54 is a three-dimensional sipe. As shown in FIG. 6, the sipe body 54 may be a two-dimensional sipe expanding like a flat plate. In this case, the sipe body 54 extends linearly in a longitudinal direction and extends linearly in a depth direction.

While the tire 2 is travelling, the sipe body 54 has wall surfaces that are in contact with each other to support each other. When the tread 4 is deformed and the wall surfaces of the sipe body 54 as the three-dimensional sipe come into tight contact with each other, the wall surfaces restrain each other so as to effectively increase stiffness of the tread 4. The tire 2 can be effectively reduced in rolling resistance as well as can be improved in wear resistance. As described above, the rubber composition of the tread 4 contains silica as a filler. This may decrease stiffness of the tread 4 in comparison to a case where the filler contains only carbon black. However, in a case where the sipe body 54 is formed as the three-dimensional sipe extending in a zigzag manner in the longitudinal direction and the depth direction, the tread 4 can maintain stiffness at the required degree. From this viewpoint, the sipe body 54 of the transverse sipe 52 preferably extends in a zigzag manner in the longitudinal direction and the depth direction.

As described above, the tubular portion 56 is smaller in groove width than the sipe body 54. Specifically, the maximum groove width WT of the tubular portion 56 is preferably not less than four times the groove width at the groove opening 52M of the sipe body 54, in other words, the groove width Wp of the transverse sipe 52, and is more preferably not less than five times. The tubular portion 56 can thus contribute to maintaining wet performance. The maximum groove width WT of the tubular portion 56 is preferably not greater than thirteen times the groove width Wp of the transverse sipe 52, and is more preferably not greater than twelve times. The tubular portion 56 is thus appropriately maintained in size. This suppresses a decrease in stiffness of the main block 50.

The tubular portion 56 includes a bottom surface including the groove bottom 52T of the transverse sipe 52. In the section shown in FIG. 4, the bottom surface of the tubular portion 56 has a contour indicated by an arc passing through the groove bottom 52T. FIG. 4 includes an arrow Rb indicating a radius of the arc.

The radius Rb of the arc indicating the contour of the bottom surface of the tubular portion 56 is preferably not less than 1.5 mm and not greater than 3.5 mm.

The radius Rb set to be not less than 1.5 mm effectively suppresses a crack in the groove bottom 52T. The radius Rb is more preferably not less than 2.0 mm from this viewpoint.

The radius Rb set to be not greater than 3.5 mm suppresses a decrease in stiffness of the main block 50 due to provision of the tubular portion 56 at the transverse sipe 52. This appropriately maintains stiffness of the main block 50. The tire 2 can be improved in uneven wear resistance. The radius Rb is more preferably not greater than 3.0 mm from this viewpoint.

As shown in FIG. 2, the circumferential narrow grooves 18 circumferentially extend not linearly but while meandering. In particular, the circumferential narrow grooves 18 of the tire 2 include first narrow grooves 66 close to the first end TE1 of the tread surface 6, second narrow grooves 68 close to the second end TE2 of the tread surface 6, and connection narrow grooves 70 connecting the first narrow groove 66 and the second narrow groove 68.

The connection narrow grooves 70 include the connection narrow groove 70 also referred to as first connection narrow groove 70a connecting the first narrow groove 66 positioned adjacent to the former contact portion and the second narrow groove 68 positioned adjacent to the latter contact portion. The connection narrow grooves 70 include the connection narrow groove 70 also referred to as second connection narrow groove 70b connecting the second narrow groove 68 positioned adjacent to the former contact portion and the first narrow groove 66 positioned adjacent to the latter contact portion.

Assuming that each unit referred to as groove unit includes the first narrow groove 66, the first connection narrow groove 70a, the second narrow groove 68, and the second connection narrow groove 70b connected in the mentioned order, the circumferential narrow groove 18 is formed by circumferentially connecting a plurality of groove units. The first narrow grooves 66 and the second narrow grooves 68 are alternately disposed circumferentially.

When the tread surface 6 comes into contact with a road surface and the tread 4 is deformed, the facing wall surfaces 18W of the circumferential narrow groove 18 come into contact with each other at the body portion main body 64. The circumferential narrow groove 18 circumferentially extends while meandering, and the wall surfaces 18W are thus effectively engaged with each other. The main land portions 28 positioned on the both sides of the circumferential narrow groove 18 restrain each other. The main land portions 28 are increased in apparent stiffness. This effectively suppresses deformation of the main land portions 28. The tire 2 can be effectively reduced in rolling resistance as well as can be improved in wear resistance. As described above, the rubber composition of the tread 4 contains silica as a filler. The tread may thus be decreased in stiffness in comparison to the case where the filler contains only carbon black. However, the circumferential narrow groove 18 includes the first narrow grooves 66, the second narrow grooves 68, and the connection narrow grooves 70 and the first narrow grooves 66 and the second narrow grooves 68 are alternately disposed circumferentially so as to maintain stiffness of the tread 4 at the required degree. From this viewpoint, preferably, the circumferential narrow groove 18 includes the first narrow grooves 66, the second narrow grooves 68, and the connection narrow grooves 70 each connecting the first narrow groove 66 and the second narrow groove 68, and the first narrow grooves 66 and the second narrow grooves 68 are alternately disposed circumferentially.

As described above, the center circumferential groove 14 of the tire 2 is the circumferential narrow groove 18. The tire 2 includes a pair of center circumferential grooves 14 disposed to interpose the equator plane, that is, the first center circumferential groove 141 and the second center circumferential groove 142.

The first center circumferential groove 141 is a first circumferential narrow groove 181, whereas the second center circumferential groove 142 is a second circumferential narrow groove 182.

The first narrow grooves 66 and the second narrow grooves 68 in the circumferential narrow groove 18 extend circumferentially. The first narrow grooves 66 and the second narrow grooves 68 have constant circumferential lengths.

The second narrow grooves 68 in the second circumferential narrow groove 182 are equal in length to the first narrow grooves 66 in the first circumferential narrow groove 181, whereas the first narrow grooves 66 in the second circumferential narrow groove 182 are equal in length to the second narrow grooves 68 in the first circumferential narrow groove 181.

The first narrow grooves 66 in the first circumferential narrow groove 181 and the second narrow grooves 68 in the second circumferential narrow groove 182 are positioned adjacent to the ends TE of the tread surface 6, whereas the second narrow grooves 68 in the first circumferential narrow groove 181 and the first narrow grooves 66 in the second circumferential narrow groove 182 are positioned adjacent to the equator plane.

Hereinafter for convenient description, the second narrow grooves 68 in the first circumferential narrow groove 181 and the first narrow grooves 66 in the second circumferential narrow groove 182 are referred to as inner narrow grooves 72, whereas the first narrow grooves 66 in the first circumferential narrow groove 181 and the second narrow grooves 68 in the second circumferential narrow groove 182 are referred to as outer narrow grooves 74. The first connection narrow grooves 70a in the first circumferential narrow groove 181 and the second connection narrow grooves 70b in the second circumferential narrow groove 182 are referred to as outer connection grooves 76s. Each of the outer connection grooves 76s connects the outer narrow groove 74 adjacent to the former contact portion and the inner narrow groove 72 adjacent to the latter contact portion. The second connection narrow grooves 70b in the first circumferential narrow groove 181 and the first connection narrow grooves 70a in the second circumferential narrow groove 182 are referred to as inner connection grooves 76u. Each of the inner connection grooves 76u connects the inner narrow groove 72 adjacent to the former contact portion and the outer narrow groove 74 adjacent to the latter contact portion.

The inner narrow grooves 72 (hereinafter, first inner narrow grooves 721) in the first circumferential narrow groove 181 are positioned closer to the latter contact portion than the inner narrow grooves 72 (hereinafter, second inner narrow grooves 722) in the second circumferential narrow groove 182. Part of the first inner narrow grooves 721 and the second inner narrow grooves 722 are axially overlapped with each other.

The outer narrow grooves 74 (hereinafter, first outer narrow grooves 741) in the first circumferential narrow groove 181 are positioned closer to the latter contact portion than the outer narrow grooves 74 (hereinafter, second outer narrow grooves 742) in the second circumferential narrow groove 182. Part of the first outer narrow grooves 741 and the second outer narrow grooves 742 are axially overlapped with each other.

FIG. 1 includes a double-pointed arrow LS indicating a length as a circumferential length of the inner narrow groove 72. FIG. 1 includes a double-pointed arrow LL indicating a length as a circumferential length of the outer narrow groove 74. The outer narrow grooves 74 are longer than the inner narrow grooves 72 in the tire 2. Specifically, the circumferential length LL of the outer narrow grooves 74 is preferably not less than 1.1 times and not greater than 1.5 times the circumferential length LS of the inner narrow grooves 72.

The first circumferential narrow groove 181 and the second circumferential narrow groove 182 are close to each other where the first inner narrow groove 721 and the second inner narrow groove 722 face each other, and are far from each other where the first outer narrow groove 741 and the second outer narrow groove 742 face each other.

The first circumferential narrow groove 181 and the second circumferential narrow groove 182 have an axial distance varied in the circumferential direction. The axial distance is short between the first inner narrow groove 721 and the second inner narrow groove 722, and is long between the first outer narrow groove 741 and the second outer narrow groove 742.

The inner main lateral groove 80 carved in the inner main land portion 28u connects the first inner narrow groove 721 and the second inner narrow groove 722 having the short axial distance. The inner main lateral groove 80 is disposed where the circumferential narrow grooves 18 adjacent to each other are close to each other.

As described above, the first outer narrow groove 741 is positioned closer to the latter contact portion than the second outer narrow groove 742. The inner main lateral groove 80 positioned adjacent to the first end TE1 of the tread surface 6 has an end positioned closer to the latter contact portion than another end of the inner main lateral groove 80 positioned adjacent to the second end TE2. In other words, the inner main lateral groove 80 is inclined relative to the axial direction.

The inner main block 50u formed between the first circumferential narrow groove 181 and the second circumferential narrow groove 182 is positioned circumferentially between the inner main lateral groove 80 adjacent to the former contact portion and the inner main lateral groove 80 adjacent to the latter contact portion, and is positioned axially between the first outer narrow groove 741 and the second outer narrow groove 742. Furthermore, the outer narrow grooves 74 are longer than the inner narrow grooves 72, and the axial distance between the first outer narrow groove 741 and the second outer narrow groove 742 is longer than the axial distance between the first inner narrow groove 721 and the second inner narrow groove 722.

The inner main block 50u formed between the circumferential narrow grooves 18 adjacent to each other is surrounded with two inner main lateral grooves 80 disposed where the circumferential narrow grooves 18 adjacent to each other are close to each other, and two outer narrow grooves 74 each of which is an element of the circumferential narrow groove 18. The inner main block 50u has a shape like an octagon. The tire 2 can suppress an increase in ground-contact pressure at an edge of the inner main block 50u. The tire 2 can be improved in uneven wear resistance. From this viewpoint, the inner main lateral groove 80 extending between the circumferential narrow grooves 18 adjacent to each other is preferably disposed where the circumferential narrow grooves 18 adjacent to each other are close to each other.

The inner peaks 16u of the shoulder circumferential groove 16 as the circumferential wide groove 20 include first inner peaks 16uu axially overlapped with the inner narrow grooves 72 of the circumferential narrow groove 18 and second inner peaks 16us axially overlapped with the outer narrow grooves 74. The first inner peaks 16uu and the second inner peaks 16us are alternately disposed circumferentially such that the first inner peak 16uu and the second inner peak 16us interpose the outer peak 16s.

The outer peaks 16s of the shoulder circumferential groove 16 include first outer peaks 16sa overlapped with the shoulder lateral grooves 44 and second outer peaks 16sb overlapped with the shoulder blocks 46. The first outer peaks 16sa and the second outer peaks 16sb are alternately disposed circumferentially such that the first outer peak 16sa and the second outer peak 16sb interpose the inner peak 16u.

Single amplitude of the circumferential narrow groove 18 corresponds to double amplitude of the shoulder circumferential groove 16, that is, the circumferential wide groove 20. When the tire 2 travels on a wet road surface, water is likely to flow in the circumferential wide grooves 20. The circumferential wide grooves 20 can contribute to improvement in wet performance.

The circumferential wide groove 20 and the circumferential narrow groove 18 have an axial distance varied in the circumferential direction. The axial distance from the circumferential wide groove 20 adjacent to the first end TE1 of the tread surface 6 is short between the second inner peak 16us and the outer narrow groove 74 and is long between the first outer peak 16sa and the inner narrow groove 72. The axial distance from the circumferential wide groove 20 adjacent to the second end TE2 of the tread surface 6 is short between the second inner peak 16us and the outer narrow groove 74 and is long between the second outer peak 16sb and the inner narrow groove 72.

The outer main lateral groove 78 carved in the outer main land portion 28s connects the second inner peak 16us of the circumferential wide groove 20 and the outer narrow groove 74 having the short axial distance. The outer main lateral groove 78 is disposed where the circumferential wide groove 20 and the circumferential narrow groove 18 are close to each other.

As shown in FIG. 2, the outer main lateral groove 78 is axially inclined in the outer main land portion 28s. The outer main lateral groove 78 has an axially inner end positioned closer to the former contact portion than an axially outer end. When the tire 2 travels, the axially inner end of the outer main lateral groove 78 comes into contact with a road surface prior to the axially outer end. The outer main lateral groove 78 extends axially outward from the axially inner end. When the tire 2 travels on a wet road surface, the outer main lateral groove 78 can effectively drain water between the tire 2 and the road surface from a ground-contact surface. The tire 2 can be improved in wet performance. From this viewpoint, in the outer main land portion 28s, preferably, the outer main lateral groove 78 is inclined relative to the axial direction, and the axially inner end of the outer main lateral groove 78 comes into contact with the road surface prior to the axially outer end.

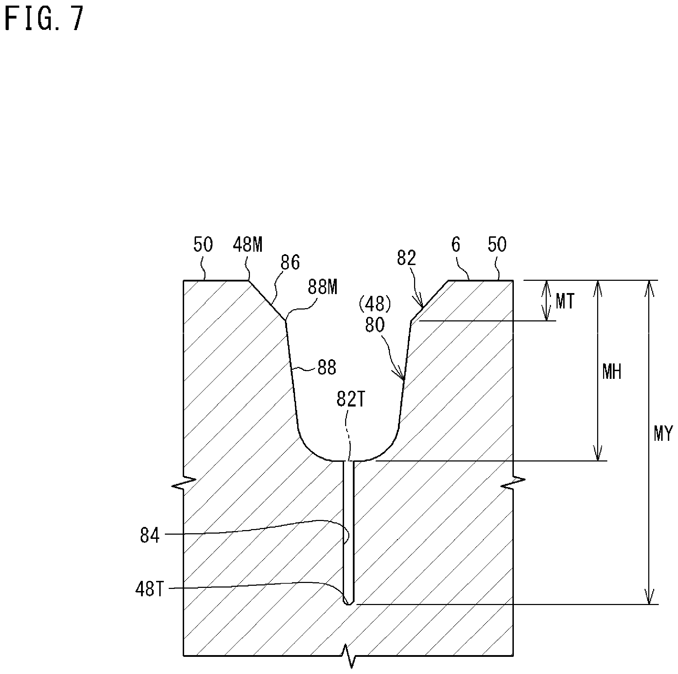

FIG. 7 is a sectional view of the inner main lateral groove 80 taken along a line VII-VII in FIG. 2. FIG. 7 shows a section of the inner main lateral groove 80 along a plane perpendicular to a longitudinal direction of the inner main lateral groove 80. In the tire 2, the outer main lateral groove 78 is equal in sectional shape to the inner main lateral groove 80. Description is not made to the sectional shape of the outer main lateral groove 78.

FIG. 7 shows a sectional shape of the main lateral groove 48. The sectional shape of the main lateral groove 48 will be described with reference to FIG. 7.

The main lateral groove 48 includes a lateral groove body 82 and a bottom sipe portion 84. The lateral groove body 82 includes a groove opening 48M of the main lateral groove 48. The lateral groove body 82 has a groove width not less than 1.0 mm. The lateral groove body 82 is not a sipe. The bottom sipe portion 84 includes a groove bottom 48T of the main lateral groove 48. The bottom sipe portion 84 is smaller in groove width than the lateral groove body 82. Specifically, the groove width of the bottom sipe portion 84 is less than 1.0 mm. The bottom sipe portion 84 is a sipe.

The lateral groove body 82 includes a tapered portion 86 and a body portion 88. The tapered portion 86 includes the groove opening 48M mentioned above. The tapered portion 86 is tapered inward from the groove opening 48M. The body portion 88 is positioned radially inside the tapered portion 86. The body portion 88 is provided continuously to the tapered portion 86. The body portion 88 and the tapered portion 86 have a boundary as a groove opening 88M of the body portion 88. The body portion 88 is tapered inward from the groove opening 88M. The body portion 88 includes a groove bottom 82T of the lateral groove body 82. The body portion 88 is larger in groove width than the bottom sipe portion 84.

The lateral groove body 82 is not necessarily provided with the tapered portion 86. In this case, a section of the lateral groove body 82 is shaped such that a wall surface of the body portion 88 shown in FIG. 7 is expanded outward and an extension line of the wall surface and the extension line of the tread surface 6 intersect each other at the groove opening of the main lateral groove 48.

From the viewpoint that the tire 2 can effectively suppress a strain concentration to the edge of the main block 50 while ensuring groove capacity of the main lateral groove 48, the lateral groove body 82 of the main lateral groove 48 is preferably provided with the tapered portion 86 as shown in FIG. 7.

The bottom sipe portion 84 is positioned radially inside the lateral groove body 82. The bottom sipe portion 84 is carved in the groove bottom 82T of the lateral groove body 82. The bottom sipe portion 84 extends further inward from the groove bottom 82T of the lateral groove body 82. The bottom sipe portion 84 is shaped with use of a blade made of a flat plate. The bottom sipe portion 84 has a planar wall surface.

FIG. 7 includes a double-pointed arrow MY indicating a length as a groove depth of the main lateral groove 48. FIG. 7 includes a double-pointed arrow MH indicating a length as a groove depth of the lateral groove body 82. FIG. 7 includes a double-pointed arrow MT indicating a length as a groove depth of the tapered portion 86.

The groove depth MY of the main lateral groove 48 is equal to the groove depth DGC of the circumferential groove 10, or the groove depth MY of the main lateral groove 48 is shallower than the groove depth DGC of the circumferential groove 10. Specifically, the groove depth MY of the main lateral groove is preferably not less than 0.80 times and not greater than 1.00 times the groove depth DGCs of the shoulder circumferential groove 16.

From the viewpoint that the tire 2 can effectively suppress a strain concentration to the edge of the main block 50 while ensuring the groove capacity of the main lateral groove 48, a ratio (MT/MY) of the groove depth MT of the tapered portion 86 to the groove depth MY of the main lateral groove 48 is preferably not less than 0.12 and not greater than 0.14.

In the tire 2, the entire tubular portion 56 of the transverse sipe 52 is preferably positioned radially inside the groove bottom 82T of the lateral groove body 82 of the main lateral groove 48. In other words, the groove depth DC of the sipe body 54 of the transverse sipe 52 is preferably larger than the groove depth MH of the lateral groove body 82 of the main lateral groove 48. Accordingly, the tubular portion 56 of the transverse sipe 52 is exposed after the lateral groove body 82 of the main lateral groove 48 disappears. The tread 4 can progress wear while maintaining stiffness of the main block 50. The tire 2 can suppress wear in a center portion and can thus maintain excellent uneven wear resistance. After the lateral groove body 82 disappears, the bottom sipe portion 84 is exposed in the main lateral groove 48 and the tubular portion 56 is exposed in the transverse sipe 52. The tire 2 can also suppress deterioration in outer appearance quality and traction performance due to disappearance of the lateral groove body 82.

A ratio (DC/HM) of the groove depth DC of the sipe body 54 of the transverse sipe 52 to the groove depth HM of the circumferential narrow groove 18 is preferably not less than 0.60 and not greater than 0.80.

When the ratio (DC/HM) is set to be not less than 0.60, the tire 2 can achieve exposure of the tubular portion 56 at appropriate timing. The tire 2 can progress wear of the tread 4 while maintaining stiffness of the main block 50. The tire 2 can effectively suppress wear in the center portion and can thus maintain excellent uneven wear resistance. The ratio (DC/HM) is more preferably not less than 0.65 from this viewpoint.

When the ratio (DC/HM) set to be not greater than 0.80, the tubular portion 56 can effectively contribute to improvement in outer appearance quality and exhibition of traction performance. The ratio (DC/HM) is more preferably not greater than 0.75 from this viewpoint.

A ratio (MH/HM) of the groove depth MH of the lateral groove body 82 of the main lateral groove 48 to the groove depth HM of the circumferential narrow groove 18 is preferably not less than 0.30 and not greater than 0.60.

When the ratio (MH/HM) is set to be not less than 0.30, the tire 2 can achieve disappearance of the lateral groove body 82 at appropriate timing. The tire 2 can maintain excellent outer appearance quality and excellent traction performance. The ratio (MH/HM) is more preferably not less than 0.35 from this viewpoint.

When the ratio (MH/HM) is set to be not greater than 0.60, the tire 2 can effectively suppress an impact of the lateral groove body 82 on stiffness of the main block 50. The tire 2 can progress wear of the tread 4 while maintaining stiffness of the main block 50. The tire 2 can effectively suppress wear in the center portion and can thus maintain excellent uneven wear resistance. The ratio (MH/HM) is more preferably not greater than 0.55 from this viewpoint.

From the viewpoint that the tire 2 can be improved in uneven wear resistance and can suppress deterioration in outer appearance quality and traction performance due to progress of wear, more preferably, the ratio (DC/HM) is not less than 0.60 and not greater than 0.80 and the ratio (MH/HM) is not less than 0.30 and not greater than 0.60.

In the tire 2, the entire bottom sipe portion 84 of the main lateral groove 48 is preferably positioned radially inside the body portion 58 of the circumferential narrow groove 18. In other words, the groove depth MH of the lateral groove body 82 of the main lateral groove 48 is preferably larger than the groove depth HH of the body portion 58 of the circumferential narrow groove 18. The groove width of the enlarged width portion 60 of the circumferential narrow groove 18 gradually increases radially inward from the boundary PS between the body portion 58 and the enlarged width portion 60. The bottom sipe portion 84 of the main lateral groove 48 and the sipe body 54 of the transverse sipe 52 coexist momentarily after disappearance of the lateral groove body 82 and before exposure of the tubular portion 56 of the transverse sipe 52. A rapid change in stiffness of the main block 50 is suppressed during this period. The tire 2 can maintain excellent uneven wear resistance. The enlarged width portion 60 can effectively contribute to excellent outer appearance quality and exhibition of traction performance.

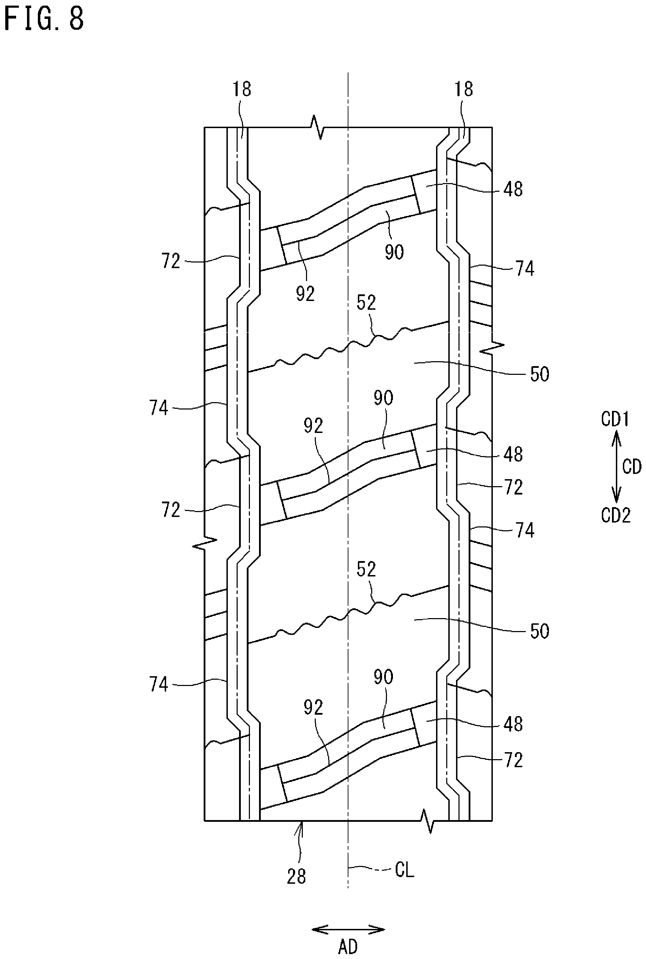

FIG. 8 shows main lateral grooves 48 according to a variation.

Each of the main lateral grooves 48 shown in FIG. 8 has the groove bottom not provided with the bottom sipe portion 84 described above but provided with a tie bar 90 rising from a portion at the groove bottom. The main lateral groove 48 includes the tie bar 90. The tie bar 90 extends between the main blocks 50 positioned on both circumferential sides.

The tie bar 90 suppresses an inclination of the main blocks 50. This increases stiffness of the tread 4. The tie bar 90 can contribute to reduction in rolling resistance and improvement in wear resistance.

From this viewpoint, the main lateral groove 48 may include the tie bar 90 rising from the portion at the groove bottom and extending between the main blocks 50 positioned on the both sides.

In this case, there may be further provided a sipe 92 longitudinally crossing the tie bar 90 in order to suppress an excessive increase in stiffness due to the tie bar 90.

As apparent from the above description, the present invention provides a heavy duty tire that can suppress a decrease in wet performance due to wear while reducing rolling resistance.

EXAMPLES

The following will describe the present invention in further detail by means of examples, etc., but the present invention is not limited to these examples.

Various chemicals used in Examples and Comparative Examples are described below.

NR: TSR20

SBR: HPR840 (S-SBR, styrene content: 10% by mass, vinyl content: 42% by mole, Tg: -60°C, Mw: 190 thousand) manufactured by JSR Corporation

BR: UBEPOL BR (registered trademark) 150B (cis content: 97% by mole) manufactured by Ube Industries, Ltd.

Carbon black 1: DIABLACK N134 ($N_2SA$: 148 m$^2$/g) manufactured by Mitsubishi Chemical Corporation

Carbon black 2: SS550 (carbon black obtained from the pyrolysis process of tires) manufactured by Strebl Green Carbon Pte Ltd.

Silica 1: ULTRASIL 9100GR ($N_2SA$: 230 m$^2$/g, average primary particle diameter: 15 nm) manufactured by Evonik Degussa GmbH

Silica 2: K185 (amorphous silica refined from rice husks) manufactured by Wilmar

Silane coupling agent: Si266 (bis(3-triethoxysilylpropyl)disulfide) manufactured by Evonik Degussa GmbH

Resin component: Oppera PR-383 (hydrogenated DCPD/C9 resin, resin containing dicyclopentadiene, styrene, and indene as monomer components, softening point: 103°C) manufactured by Exxon Mobil Corporation

Wax: OZOACE-0355 manufactured by NIPPON SEIRO CO., LTD.

Antioxidant 1: NOCRAC 6C (N-(1,3-dimethylbutyl)-N'-phenyl-p-phenylenediamine) manufactured by OUCHI SHINKO CHEMICAL INDUSTRIAL CO., LTD.

Antioxidant 2: NOCRAC RD (poly(2,2,4-trimethyl-1,2-dihydroquinoline)) manufactured by OUCHI SHINKO CHEMICAL INDUSTRIAL CO., LTD.

Stearic acid: bead stearic acid, Tsubaki, manufactured by NOF Corporation

Zinc oxide: Zinc Oxide Type-1 manufactured by Mitsui Mining & Smelting Co., Ltd.

Sulfur: HK-200-5 (powdery sulfur containing 5% of oil) manufactured by Hosoi Chemical Industry Co., Ltd.

Vulcanization accelerator: NOCCELER NS (N-t-butyl-2-benzothiazole sulfenamide) manufactured by OUCHI SHINKO CHEMICAL INDUSTRIAL CO., LTD.

[Examples and Comparative Examples]

In accordance with each blending formula shown in Tables 1 to 3, materials other than sulfur and a vulcanization accelerator are kneaded under a condition of 150°C for 5 minutes by using a 1.7-L Banbury mixer manufactured by Kobe Steel, Ltd., to obtain a kneaded product. Next, the sulfur and the vulcanization accelerator are added to the obtained kneaded product, and the mixture is kneaded under a condition of 80°C for 5 minutes by using an open roll, to obtain a rubber composition (uncrosslinked rubber composition). The obtained rubber composition is molded into a tread and attached together with other parts such as sidewalls to form an unvulcanized tire. The unvulcanized tire is press-vulcanized under a condition of 150°C for 12 minutes to produce a test tire (size: 315/70R22.5, tire for trucks and buses). The tread pattern shown in FIG. 1 is used as the tread pattern of the test tire.

[Preparation prior to evaluation]

The tread of the test tire is subjected to buffing. Specifically, the tread is polished until the sipe body of the transverse sipe disappears. The body portion of the circumferential narrow groove and the tubular portion of the transverse sipe are exposed on the tread surface. This reproduces the middle stage of wear.

Tables 1 to 3 show calculation results based on the following evaluation method of the test tire having wear at the middle stage reproduced by buffing.

[Rolling Resistance (RRC)]

Using a rolling resistance testing machine, a rolling resistance coefficient (RRC) is measured when each test tire in which the middle stage of wear is reproduced ran on a drum at a speed of 80 km/h under the following conditions. The reciprocals of the measured values of Example 1 and Comparative Examples 1 and 2 are represented as indexes with that of Comparative Example 2 as 100. The reciprocals of the measured values of Examples 2 and 3 and Comparative Examples 3 and 4 are represented as indexes with that of Comparative Example 4 as 100. The reciprocals of the measured values of Examples 4 and 5 and Comparative Examples 5 and 6 are represented as indexes with that of Comparative Example 6 as 100.

The results are shown in the cells for "RRC" in Tables 1 to 3 below. The higher the value is, the lower the rolling resistance of the tire is.

Rim: 9.00×22.5
Internal pressure: 900 kPa
Vertical load: 31.25 kN

[Wet Performance (WET)]

Wet performance (wet braking performance) is tested in accordance with R117-02 (ECE Regulation, No. 117, Revision 2) using a test vehicle described below. Test tires in which the middle stage of wear is reproduced are mounted to all wheels of the test vehicle. As to wet performance, a braking distance that the test vehicle traveled on a wet road surface from the start of braking at a predetermined initial speed until the test vehicle stopped is measured.

Test vehicle: truck with a load capacity of 10 t (2-D vehicle)
Load: 75% of the standard load weight
Wet road surface: water depth of 0.5 to 2 mm
Speed: 65 km/h

The measured values of Example 1 and Comparative Examples 1 and 2 are represented as indexes with that of Comparative Example 2 as 100 by the following equation.

(Wet performance index) = (braking distance of tire of Comparative Example 2)/(braking distance of each test tire) $\times$ 100

The measured values of Examples 2 and 3 and Comparative Examples 3 and 4 are represented as indexes with that of Comparative Example 4 as 100 by the following equation.

(Wet performance index) = (braking distance of tire of Comparative Example 4)/(braking distance of each test tire) $\times$ 100

The measured values of Examples 4 and 5 and Comparative Examples 5 and 6 are represented as indexes with that of Comparative Example 6 as 100 by the following equation.

(Wet performance index) = (braking distance of tire of Comparative Example 6)/(braking distance of each test tire) $\times$ 100

The results are shown in the cells for "WET" in Tables 1 to 3 below. The higher the value is, the better the wet performance is.

[Table 1]

|  | Ex. 1 | Comp. Ex. 1 | Comp. Ex. 2 |
|---|---|---|---|
| Blending formula [parts by mass] |  |  |  |
| NR | 60 | 100 | 100 |
| SBR | 20 | - | - |
| BR | 20 | - | - |
| CB1 | 35 | 55 | 35 |
| CB2 | - | - | - |
| Silica 1 | 25 | 5 | 25 |
| Silica 2 | - | - | - |
| Coupling agent | 2.5 | - | 2.5 |
| Resin | 3 | 3 | 3 |
| Wax | 1.5 | 1.5 | 1.5 |
| Antioxidant 1 | 1 | 1 | 1 |
| Antioxidant 2 | 1 | 1 | 1 |
| Stearic acid | 3 | 3 | 3 |
| Zinc oxide | 3 | 3 | 3 |

(continued)

|  | Ex. 1 | Comp. Ex. 1 | Comp. Ex. 2 |
|---|---|---|---|
| Blending formula [parts by mass] |  |  |  |
| Sulfur | 1.5 | 1.5 | 1.5 |
| Vulcanization accelerator | 2 | 1.5 | 2 |
| Amount CSB [parts by mass] | 20 | 0 | 0 |
| Amount BS [parts by mass] | 25 | 5 | 25 |
| Amount CS [parts by mass] | 42 | 8 | 42 |
| IDC - HH| [mm] | 3.0 | 3.0 | 3.0 |
| (CSB + BS)/|DC - HH| | 15.0 | 1.7 | 8.3 |
| RRC | 115 | 80 | 100 |
| WET | 115 | 80 | 100 |

[Table 2]

|  | Ex. 2 | Ex. 3 | Comp. Ex. 3 | Comp. Ex. 4 |
|---|---|---|---|---|
| Blending formula [parts by mass] |  |  |  |  |
| NR | 50 | 50 | 100 | 100 |
| SBR | 50 | 50 | - | - |
| BR | - | - | - | - |
| CB1 | 60 | 60 | 70 | 60 |
| CB2 | - | - | - | - |
| Silica 1 | 15 | - | 5 | 15 |
| Silica 2 | - | 15 | - | - |
| Coupling agent | 1.5 | 1.5 | 0 | 1.5 |
| Resin | 3 | 3 | 3 | 3 |
| Wax | 1.5 | 1.5 | 1.5 | 1.5 |
| Antioxidant 1 | 1 | 1 | 1 | 1 |
| Antioxidant 2 | 1 | 1 | 1 | 1 |
| Stearic acid | 3 | 3 | 3 | 3 |
| Zinc oxide | 3 | 3 | 3 | 3 |
| Sulfur | 1.5 | 1.5 | 1.5 | 1.5 |
| Vulcanization accelerator | 2 | 2 | 1.5 | 2 |
| Amount CSB [parts by mass] | 50 | 50 | 0 | 0 |
| Amount BS [parts by mass] | 15 | 15 | 5 | 15 |
| Amount CS [parts by mass] | 20 | 20 | 7 | 20 |
| IDC - HH| [mm] | 3.0 | 3.0 | 3.0 | 3.0 |
| (CSB + BS)/|DC - HH| | 21.7 | 21.7 | 1.7 | 5.0 |
| RRC | 110 | 110 | 85 | 100 |
| WET | 120 | 120 | 85 | 100 |

[Table 3]

| | Ex. 4 | Ex. 5 | Comp. Ex. 5 | Comp. Ex. 6 |
|---|---|---|---|---|
| Blending formula [parts by mass] | | | | |
| NR | 40 | 40 | 100 | 100 |
| SBR | 30 | 30 | - | - |
| BR | 30 | 30 | - | - |
| CB1 | 5 | - | 65 | 5 |
| CB2 | - | 5 | - | - |
| Silica 1 | 65 | 65 | 5 | 65 |
| Silica 2 | - | - | - | - |
| Coupling agent | 6.5 | 6.5 | - | 6.5 |
| Resin | - | - | - | - |
| Wax | 1.5 | 1.5 | 1.5 | 1.5 |
| Antioxidant 1 | 1 | 1 | 1 | 1 |
| Antioxidant 2 | 1 | 1 | 1 | 1 |
| Stearic acid | 3 | 3 | 3 | 3 |
| Zinc oxide | 3 | 3 | 3 | 3 |
| Sulfur | 1.5 | 1.5 | 1.5 | 1.5 |
| Vulcanization accelerator | 2 | 2 | 1.5 | 2 |
| Amount CSB [parts by mass] | 30 | 30 | 0 | 0 |
| Amount BS [parts by mass] | 65 | 65 | 5 | 65 |
| Amount CS [parts by mass] | 93 | 93 | 7 | 93 |
| IDC - HH\| [mm] | 3.0 | 3.0 | 3.0 | 3.0 |
| (CSB + BS)/\|DC - HH\| | 31.7 | 31.7 | 1.7 | 21.7 |
| RRC | 105 | 105 | 80 | 100 |
| WET | 125 | 125 | 80 | 100 |

**INDUSTRIAL** APPLICABILITY

The above technique achieving suppression of a decrease in wet performance due to wear while reducing rolling resistance is applicable to various tires.

REFERENCE SIGNS LIST

2        tire
4        tread
6        tread surface
10        circumferential groove
12        land portion
18        circumferential narrow groove
181        first circumferential narrow groove
182        second circumferential narrow groove
20        circumferential wide groove
28        main land portion
28s        outer main land portion

28u    inner main land portion
32     lateral groove
48     main lateral groove
50     main block
52     transverse sipe
54     sipe body
56     tubular portion
58     body portion
60     enlarged width portion
62     tapered portion
64     body portion main body
66     first narrow groove
68     second narrow groove
70     connection narrow groove
90     tie bar

**Claims**

1. A heavy duty tire comprising a tread formed from a rubber composition containing a rubber component including a styrene butadiene rubber and a filler including silica, the tread having a tread surface configured to come into contact with a road surface, wherein

the tread includes a plurality of circumferential grooves continuously extending circumferentially,
the plurality of circumferential grooves provides the tread with a plurality of land portions aligned axially,
the plurality of land portions includes a plurality of main land portions positioned between the circumferential grooves adjacent to each other,
each of the main land portions includes a plurality of main lateral grooves connecting the circumferential grooves adjacent to each other,
the plurality of main lateral grooves provides the main land portions with a plurality of main blocks aligned circumferentially,
in at least one of the main land portions, each of the main blocks includes a transverse sipe traversing the main block,
the transverse sipe includes a sipe body and a tubular portion positioned radially inside the sipe body,
the tubular portion is larger in groove width than the sipe body,
the circumferential groove positioned between the main land portions adjacent to each other is a circumferential narrow groove,
in the plurality of main land portions, the main land portions positioned axially outermost are outer main land portions,
the circumferential groove positioned axially outside each of the outer main land portions is a circumferential wide groove larger in groove width than the circumferential narrow groove,
the circumferential narrow groove includes a body portion and an enlarged width portion positioned radially inside the body portion,
the body portion includes a body portion main body provided continuously from the enlarged width portion,
the tread is deformed to bring facing wall surfaces of the circumferential narrow groove into contact with each other at the body portion main body,
the enlarged width portion is larger in groove width than the body portion main body, a groove depth HH of the body portion is smaller than a groove depth DC of the sipe body, or the groove depth DC of the sipe body is smaller than the groove depth HH of the body portion,
an amount CSB of the styrene butadiene rubber in 100 parts by mass of the rubber component is not less than 10 parts by mass,
an amount BS of the silica per 100 parts by mass of the rubber component is not less than 15 parts by mass, and
the amount CSB of the styrene butadiene rubber, the amount BS of the silica, the groove depth DC (mm) of the sipe body, and the groove depth HH (mm) of the body portion satisfy a relational expression: below,

$$(CSB + BS)/|DC - HH| \geq 5.$$

2. The heavy duty tire according to claim 1, wherein

the rubber component further includes a natural rubber and a butadiene rubber, and
the amount CSB of the styrene butadiene rubber, an amount CN of the natural rubber, and an amount CB of the
butadiene rubber in 100 parts by mass of the rubber component satisfy a relational expression: below,

$$CN \geq CSB + CB.$$

3. The heavy duty tire according to claim 1 or 2, wherein
an amount CS of the silica in 100 parts by mass of the filler is not less than 40 parts by mass in 100 parts by mass.

4. The heavy duty tire according to any one of claims 1 to 3, wherein
the silica includes silica made from a biomass material.

5. The heavy duty tire according to any one of claims 1 to 4, wherein
the filler includes silica having an average primary particle diameter of not greater than 16 nm.

6. The heavy duty tire according to any one of claims 1 to 5, wherein

the filler further includes carbon black, and
the carbon black includes recycled carbon black.

7. The heavy duty tire according to any one of claims 1 to 6, wherein

the filler further includes carbon black, and
the carbon black includes carbon black having an average primary particle diameter of not greater than 19 nm.

8. The heavy duty tire according to any one of claims 1 to 7, wherein
the rubber composition further contains a resin component.

9. The heavy duty tire according to any one of claims 1 to 8, wherein

a land ratio defined below is not less than 75%,
land ratio: a ratio of a total area value of ground-contact surfaces of a plurality of land portions included in a ground-contact surface to an area value of an entirety of the ground-contact surface, the ground-contact surface being obtained by: applying a load, which is 100% of a normal load, to the tire, which is fitted on a normal rim and whose internal pressure is adjusted to a normal internal pressure, with a camber angle as 0 degrees; and bringing the tire into contact with a flat road surface.

10. The heavy duty tire according to any one of claims 1 to 9, wherein
the sipe body extends in a zigzag manner in a longitudinal direction and a depth direction thereof.

11. The heavy duty tire according to any one of claims 1 to 10, wherein
the main lateral grooves each include a tie bar rising from a groove bottom and extending between the main blocks positioned on both sides.

12. The heavy duty tire according to any one of claims 1 to 11, wherein

the circumferential narrow groove includes a first narrow groove close to a first end as one end of the tread surface, a second narrow groove close to a second end as another end of the tread surface, and a connection narrow groove connecting the first narrow groove and the second narrow groove, and
the first narrow groove and the second narrow groove are alternately disposed circumferentially.

13. The heavy duty tire according to any one of claims 1 to 12, wherein
the vinyl content of the styrene butadiene rubber is not less than 26% by mole.

14. The heavy duty tire according to any one of claims 1 to 13, wherein
the groove depth HH of the body portion is shallower than the groove depth DC of the sipe body.

**15.** The heavy duty tire according to any one of claims 1 to 13, wherein
the groove depth DC of the sipe body is shallower than the groove depth HH of the body portion.

FIG. 1

EP 4 613 505 A1

# FIG. 2

FIG. 3

EP 4 613 505 A1

# FIG. 4

# FIG. 5

# FIG. 6

FIG. 7

FIG. 8

Europäisches
Patentamt

European
Patent Office

Office européen
des brevets

# EUROPEAN SEARCH REPORT

**Application Number**

EP 25 15 7753

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 183 598 A1 (SUMITOMO RUBBER IND [JP]) 24 May 2023 (2023-05-24) * paragraphs [0009] - [0036]; claims 1-15; figures 1-16 * | 1-15 | INV. B60C1/00 B60C11/03 B60C11/12 B60C11/13 |
| Y | EP 4 201 701 A1 (SUMITOMO RUBBER IND [JP]) 28 June 2023 (2023-06-28) * paragraphs [0057], [0073]; claims 1-12; figures 1,2 * | 1-15 | |
| Y | EP 3 795 377 A1 (SUMITOMO RUBBER IND [JP]) 24 March 2021 (2021-03-24) * paragraph [0007]; claims 1-3; figure 1; table 1 * | 1-15 | |
| Y | EP 2 383 127 A2 (SUMITOMO RUBBER IND [JP]) 2 November 2011 (2011-11-02) * paragraphs [0026] - [0028]; figures 1-4 * | 11 | |

**TECHNICAL FIELDS SEARCHED (IPC)**

B60C

The present search report has been drawn up for all claims

| Place of search | Date of completion of the search | Examiner |
|---|---|---|
| Munich | 22 July 2025 | Carneiro, Joaquim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 7753

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2025

| Patent document cited in search report | | Publication date | Patent family member(s) | | Publication date |
|---|---|---|---|---|---|
| EP 4183598 | A1 | 24-05-2023 | NONE | | |
| EP 4201701 | A1 | 28-06-2023 | EP | 4201701 A1 | 28-06-2023 |
| | | | JP | 2023096741 A | 07-07-2023 |
| EP 3795377 | A1 | 24-03-2021 | EP | 3795377 A1 | 24-03-2021 |
| | | | JP | 7338348 B2 | 05-09-2023 |
| | | | JP | 2021046504 A | 25-03-2021 |
| EP 2383127 | A2 | 02-11-2011 | AU | 2011201410 A1 | 10-11-2011 |
| | | | BR | PI1101642 A2 | 27-11-2012 |
| | | | CN | 102233795 A | 09-11-2011 |
| | | | EP | 2383127 A2 | 02-11-2011 |
| | | | JP | 5123981 B2 | 23-01-2013 |
| | | | JP | 2011230643 A | 17-11-2011 |
| | | | KR | 20110119541 A | 02-11-2011 |
| | | | RU | 2011115927 A | 27-10-2012 |
| | | | US | 2011259494 A1 | 27-10-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024034600 A
- JP 2017094891 A
- JP 2009002594 A
- EP 3427975 A
- JP 6856781 B
- EP 3173251 A

**Non-patent literature cited in the description**

- *Web Journal B*, 2019, vol. 6, 216-222
- *Rubber Chemistry and Technology*, 2012, vol. 85 (3), 408-449
- A Comparison of Surface Morphology And Chemistry of Pyrolytic Carbon Blacks with Commercial Carbon Blacks. *Powder Technology*, 2005, vol. 160, 190-193